# EUROPEAN PATENT APPLICATION

(11) **EP 4 443 574 A1**
(43) Date of publication of application: **09.10.2024**
(21) Application number: 23771120.5
(22) Date of filing: 16.03.2023
(51) Int. Cl.: H01M 8/2465, H01M 8/2475, H01M 8/18, H01M 50/251, H01M 50/256, H01M 50/507, H01M 50/244, H01M 8/249

(54) **SECONDARY BATTERY**

(30) Priority: 17.03.2022 KR 20220033285; 22.04.2022 KR 20220049958
(71) Applicant: Standard Energy Inc., Yuseong-gu, Daejeon 34014 (KR)
(72) Inventor: LEE, Dongyoung, Daejeon 34014 (KR); KIM, Bugi, Daejeon 34014 (KR)
(74) Representative: Vossius & Partner Patentanwälte Rechtsanwälte mbB
(86) International application number: PCT/KR2023/003547
(87) International publication number: WO 2023/177241

(57) **Abstract**

The present invention relates to a secondary battery in which metal ions dissolved in an electrolyte are oxidized/reduced, thereby charging/discharging the battery. A secondary battery module according to an embodiment of the present invention comprises a plurality of vertically-stacked layers in which oxidation-reduction reactions occur, and a pair of bus bars that electrically connect the plurality of layers, wherein each of the plurality of layers comprises an anode in which a first half-reaction occurs and a cathode in which a second half-reaction occurs, the anode and the cathode of the layers being arranged vertically.

## Description

### FIELD

The present disclosure relates to a secondary battery. More specifically, the present disclosure relates to a secondary battery in which metal ions dissolved in an electrolyte are oxidized and reduced to charge and discharge the secondary battery.

### DESCRIPTION OF RELATED ART

A redox secondary battery is a system in which an active material in the electrolyte is oxidized and reduced to charge and discharge the battery and is an electrochemical storage device that stores electrical energy as the chemical energy of an electrolyte solution. A conventional redox flow battery operates by continuously circulating the electrolyte in a tank inside a stack using a pump and causing an electrochemical reaction in the stack. The redox flow battery has a space limitation and a design difficulty due to the tank and the pump. Inventors of the present disclosure have developed a redox secondary battery free of the tank and the pump. However, due to low energy density of the redox secondary battery free of the tank and the pump, a volume and a weight thereof should be increased. Thus, high-density integration thereof is required to minimize a size and a weight of an assembly of the secondary batteries.

### DISCLOSURE

### TECHNICAL PURPOSE

A purpose of the present disclosure is to provide a secondary battery module capable of high-density integration.

Another purpose of the present disclosure is to provide a secondary battery that is capable of electrical connection even in high-density integration.

The purposes of the present disclosure are not limited to the purposes mentioned above, and other purposes not mentioned may be clearly understood by those skilled in the art from the description as set forth below.

### TECHNICAL SOLUTION

In order to achieve the purpose of the present disclosure, a secondary battery module according to one embodiment of the present disclosure comprises a stack of a plurality of layers stacked vertically, wherein a redox reaction occurs in each of the plurality of layers; and a pair of busbars electrically connecting the plurality of layers to each other, wherein each of the plurality of layers comprises: an anode in which a first half reaction occurs; and a cathode in which a second half reaction occurs, wherein the anode and the cathode of each layer are arranged vertically.

In order to achieve the purpose of the present disclosure, a secondary battery according to one embodiment of the present disclosure comprises a plurality of secondary battery modules, wherein each of the plurality of secondary battery modules comprises: a stack of a plurality of layers stacked vertically, wherein a redox reaction occurs in each of the plurality of layers; and a pair of busbars electrically connecting the plurality of layers to each other, wherein the plurality of secondary battery modules are arranged densely in a horizontal direction.

Details of other embodiments are included in the detailed description and drawings.

### TECHNICAL EFFECT

According to the secondary battery of the present disclosure, one or more of the following effects may be achieved,

First, there is an advantage of simplifying the secondary battery module, thus enabling horizontal high integration density and vertical stacking of the secondary battery modules.

Second, there is an advantage of simplifying electrical connection between the secondary battery modules and thus integrating the secondary battery modules with each other at a high density.

Third, there is an advantage that the secondary battery modules are integrated with each other at the high density to assembly the secondary battery, and, at the same time, it is easy to install and manage the secondary battery.

Fourth, there is an advantage that the secondary battery modules are integrated with each other at the high density to assembly the secondary battery, and at the same time, a temperature of the secondary battery is stable.

The effects of the present disclosure are not limited to the effects mentioned above, and other effects not mentioned may be clearly understood by those skilled in the art from the description of the claims.

### BRIEF DESCRIPTION OF DRAWINGS

FIG. 1 is an exploded perspective view of a layer of a secondary battery according to an embodiment of the present disclosure.
FIG. 2 is a cross-sectional view of a layer of a secondary battery according to an embodiment of the present disclosure.
FIG. 3 and FIG. 4 are perspective views of a secondary battery module according to an embodiment of the present disclosure.
FIG. 5 is a partial perspective view of a secondary battery module according to an embodiment of the present disclosure.
FIG. 6 is a partial cross-sectional view of a secondary battery module according to an embodiment of the present disclosure.
FIG. 7 is a partial cross-sectional view of a secondary battery module according to another embodiment of the present disclosure.
FIG. 8 and FIG. 9 are diagrams showing a state in which a plurality of secondary battery modules are arranged horizontally according to an embodiment of the present disclosure.
FIG. 10 is a diagram showing a schematic configuration of a secondary battery according to an embodiment of the present disclosure.
FIG. 11 is a diagram showing a state in which a plurality of secondary battery modules are stacked vertically according to an embodiment of the present disclosure.
FIG. 12 is a perspective view of a secondary battery module according to an embodiment of the present disclosure.
FIG. 13 is an example of use of a secondary battery module according to an embodiment of the present disclosure.
FIG. 14 is a perspective view of a secondary battery module according to another embodiment of the present disclosure.
FIG. 15 is a perspective view of a secondary battery module according to still another embodiment of the present disclosure.
FIG. 16 is a diagram showing a structure of a handle according to still another embodiment of the present disclosure.
FIG. 17 is a perspective view of a secondary battery module according to still another embodiment of the present disclosure.
FIG. 18 is a perspective view of a secondary battery module according to still yet another embodiment of the present disclosure.
FIG. 19 is a perspective view of a secondary battery module according to still yet another embodiment of the present disclosure.
FIG. 20 is a diagram showing a schematic structure of a secondary battery according to an embodiment of the present disclosure.
FIG. 21 is a diagram showing a schematic structure of a secondary battery according to an embodiment of the present disclosure.
FIG. 22 is an example of transporting a secondary battery according to an embodiment of the present disclosure.
FIG. 23 is a diagram showing a schematic configuration of a charging system including a secondary battery according to an embodiment of the present disclosure.
FIGS. 24 to 26 are diagrams showing a schematic structure of a secondary battery according to another embodiment of the present disclosure.
FIGS. 27 to 31 are diagrams showing a schematic structure of a secondary battery according to still another embodiment of the present disclosure.
FIGS. 32 to 35 are diagrams showing a schematic structure of a plurality of secondary battery modules according to still another embodiment of the present disclosure.
FIGS. 36 to 41 are diagrams showing a schematic structure of a secondary battery according to still another embodiment of the present disclosure.
FIG. 42 is a flowchart of a secondary battery control method according to still another embodiment of the present disclosure.

### DETAILED DESCRIPTIONS

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to the present disclosure will be described in detail with reference to the attached drawings. In the drawings, identical reference numerals are used to indicate identical or similar components.

Although first, second, and the like are used to describe various components, these components are not limited by such terms. Such terms are only used to distinguish one component from another component, and unless specifically stated to the contrary, a first component may also be a second component.

As used herein, the singular constitutes "a" and "an" are intended to include the plural constitutes as well, unless the context clearly indicates otherwise.

Hereinafter, it may mean that when a first component is described to be disposed "on (or under)" a second component, the first component may not only be disposed in contact with a top surface (or a bottom surface) of the second component, but also be disposed on the second component with a third component interposed therebetween.

Additionally, it should be understood that when a component is described as being "connected to", "combined to", or "coupled to" another component, the components may be directly connected or coupled to each other, but other components may be "interposed" therebetween and the components may be "connected to", "combined to", or "connected to" each other via said other components.

As used herein, singular expressions include plural expressions, unless the context clearly dictates otherwise. In the present application, terms such as "composed of" or "include" should not be construed as necessarily including all of various components or steps described herein, and should be interpreted as being able to not including some of the components or the steps and further including additional components or steps.

Throughout the present disclosure, "A and/or B" means A, B, or A and B, unless otherwise specified, and "C to D" means C inclusive to D inclusive unless otherwise specified.

Hereinafter, the present disclosure will be described with reference to drawings for illustrating the secondary battery according to embodiments of the present disclosure.

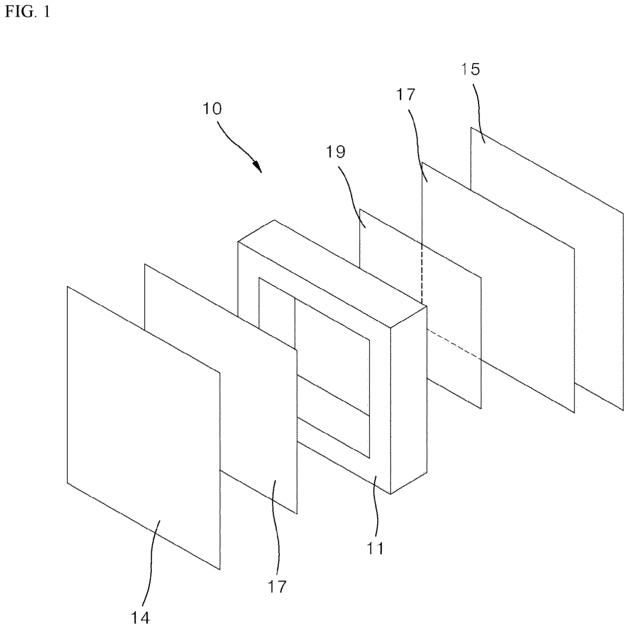

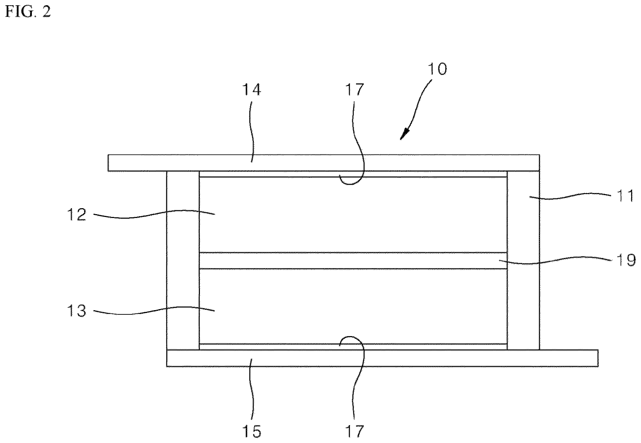

FIG. 1 is an exploded perspective view of a layer of a secondary battery according to an embodiment of the present disclosure, and FIG. 2 is a cross-sectional view of a layer of a secondary battery according to an embodiment of the present disclosure.

A layer 10 according to an embodiment of the present disclosure accumulates therein or releases therefrom electrical energy via a redox reaction of a redox couple dissolved in electrolyte. The layer 10 is a rectangular parallelepiped shape with a small height.

The layer 10 according to an embodiment of the present disclosure includes an anode 12 where a first half reaction occurs, a cathode 13 where a second half reaction occurs, a separator 19 which separates the anode 12 and the cathode 13 from each other, a frame 11 that is divided into two spaces via the separator which accommodate the anode 12 and the cathode 13, respectively, an anode current collector 14 that is electrically connected to the anode 12, and a cathode current collector 15 that is electrically connected to the cathode 13.

The anode 12 contains an electrolyte in which the anode redox couple is dissolved, and may further contain a conductive material such as carbon felt. The anode redox couple may include at least one of vanadium (V), zinc (Zn), bromine (Br), chromium (Cr), manganese (Mn), titanium (Ti), iron (Fe), cerium (Ce), and cobalt (Co). In this embodiment, the anode redox couple is a V²⁺/V³⁺ redox couple. The electrolyte may be an acidic aqueous solution as a solution which conducts electric current via ionization. Preferably, the acidic aqueous solution includes sulfuric acid. In this embodiment, the electrolyte may be prepared by dissolving VOSO₄ (vanadylsulfate) or V₂O₅ (vanadium pentoxide) in H₂SO₄ aqueous solution.

In the anode 12, the first half reaction occurs. The first half reaction is as follows:

V²⁺ ←→ V³⁺ + e⁻

where → represents a discharge reaction direction and ← represents a charge reaction direction. In a discharging operation, vanadium ions are oxidized to vanadium trivalent ions. In a charging operation, vanadium trivalent ions are reduced to vanadium divalent ions.

The anode 12 may further contain a solid electrode made of a carbon-based material such as carbon or graphite felt, carbon cloth, carbon black, graphite powder, or graphene. The solid electrode may be formed in a porous rectangular shape and may be impregnated with an electrolyte or mixed with the electrolyte in a form of powder, felt, fillet, etc.

The anode 12 is surrounded with the frame 11, the anode current collector 14 (or a bipolar plate 17), and the separator 19. The anode 12 is electrically connected to the anode current collector 14. Thus, when the battery is discharged, electrons migrate from the anode 12 to the anode current collector 14, whereas when the battery is charged, electrons from the anode current collector 14 migrate to the anode 12. The anode 12 is in contact with the separator 19, such that hydrogen cations (protons) are transferred through the separator 19.

The cathode 13 contains an electrolyte in which a cathode redox couple is dissolved, and may further contain a conductive material such as carbon felt. The cathode redox couple may include at least one of vanadium (V), zinc (Zn), bromine (Br), chromium (Cr), manganese (Mn), titanium (Ti), iron (Fe), cerium (Ce), and cobalt (Co). In this embodiment, the cathode redox couple is a V⁴⁺/V⁵⁺ redox couple. The electrolyte may be an acidic aqueous solution as a solution which conducts electric current via ionization. Preferably, the acidic aqueous solution includes sulfuric acid. In this embodiment, the electrolyte may be prepared by dissolving VOSO₄ (vanadylsulfate) or V₂O₅ (vanadium pentoxide) in H₂SO₄ aqueous solution.

In the cathode, the second half reaction occurs. The second half reaction is as follows:

V⁵⁺ + e⁻ ←→ V⁴⁺

where → represents a discharge reaction direction and ← represents a charge reaction direction. In a discharging operation, vanadium pentavalent ions are reduced to vanadium tetravalent ions. In a charging operation, vanadium tetravalent ions are oxidized to vanadium pentavalent ions.

The cathode 13 may further contain a solid electrode made of a carbon-based material such as carbon or graphite felt, carbon cloth, carbon black, graphite powder, or graphene. The solid electrode may be formed in a porous rectangular shape and may be impregnated with an electrolyte or mixed with the electrolyte in a form of powder, felt, fillet, etc.

The cathode 13 is surrounded with the frame 11, the cathode current collector 15 (or the bipolar plate 17), and the separator 19. The cathode 13 is electrically connected to the cathode current collector 15. Thus, when the battery is charged, electrons migrate from the cathode to the cathode current collector 15, whereas when the battery is discharged, electrons from the cathode current collector 15 migrate to the cathode 13. The cathode 13 is in contact with the separator 19, such that hydrogen cations (protons) are transferred through the separator 19.

Referring to FIG. 2, the anode 12 and the cathode 13 are arranged vertically. In one layer 10, the anode 12 may be disposed on top of the separator and the cathode 13 may be disposed under the separator. Alternatively, the cathode 13 may be disposed on top of the separator, and the anode 12 may be disposed under the separator.

The frame 11 is formed as a hollow hexahedron. The frame 110 preferably has a rectangular parallelepiped shape with a small height with open upper and lower surfaces. According to an embodiment, the frame 110 may be formed as a polyhedron of various shapes. The frame 11 is a hollow space that is divided into two spaces via the separator 19. The frame 11 supports the separator 19.

The separator 19 is disposed in the inner space of the frame 11 to separate the anode 12 and the cathode 13 from each other and allows hydrogen cations (protons) to migrate between the anode 12 and the cathode 13 therethrough. The separator 19 is disposed in the hollow space of the frame 11 to divide the hollow space into two spaces where the anode 12 and the cathode 13 are accommodated, respectively. The separator 19 is disposed between the anode current collector 14 and the cathode current collector 15. An edge of the separator 19 is coupled to the frame 11. Hydrogen cations migrate from the anode 12 to the cathode 13 through the separator 19 when the battery is discharged, and migrate from the cathode 13 to the anode 12 through the separator 19 when the battery is charged.

The separator 19 may include perfluorinated ionomers, partially fluorinated polymers, and non-fluorinated hydrocarbons. The separator 19 may be made of or include Nafion^{®}, Flemion^{®}, NEOSEPTA-F^{®}, or Gore Select^{®}.

The separator 19 is disposed in a center in a vertical direction (a stacking direction of a plurality of layers 10) of the frame 11. The separator 19 is coupled and fixed to the frame 11.

The anode current collector 14 is disposed on one side of the frame 11. The anode current collector 14, the frame 11 and the separator 19 defines a space where the anode 12 is accommodated. The anode current collector 14 is electrically connected to the anode 12, such that electrons migrate therebetween to cause current to flow when the battery is charged and discharged. The anode current collector 14 acts as a negative-electrode from which electrons are released when the battery is discharged, and acts as a positive-electrode into which electrons migrate when the battery is charged.

The anode current collector 14 is made of a metal with high electrical conductivity, such as copper or aluminum. The anode current collector 14 may be formed as a flexible thin film or as a rigid plate. The anode current collector 14 is formed in a rectangular plate shape such that a portion thereof protrudes horizontally beyond a side of the frame. The portion of the anode current collector 14 protrudes horizontally beyond the side of the fame.

The bipolar plate 17 may be disposed between the anode current collector 14 and the anode 12. The bipolar plate 17 may be made of a material such as graphite, carbon, and carbon plastic, and has high electrical conductivity and high acid resistance. The bipolar plate 17 is electrically connected to the anode current collector 14 and the anode 12 to allow electrons to migrate between the anode current collector 14 and the anode 12, but prevents the anode current collector 14 from being oxidized by the electrolyte of the anode 12. The bipolar plate 17 may be formed by coating the material such as graphite, carbon, and carbon plastic onto the anode current collector 14.

The cathode current collector 15 is disposed on one side of the frame 11 such that the space where the cathode 13 is accommodated is defined by the cathode current collector 15, the frame 11 and the separator 19. The cathode current collector 15 is electrically connected to the cathode 13, such that electrons migrate therebetween to cause current to flow when the battery is charged and discharged. The cathode current collector 15 acts as a positive-electrode into which electrons migrate when the battery is discharged, and acts as a negative-electrode from which electrons are released when the battery is charged.

The cathode current collector 15 is made of a metal with high electrical conductivity, for example, copper or aluminum. The cathode current collector 15 may be formed as a flexible thin film or as a rigid plate. The cathode current collector 15 is formed in a rectangular plate shape such that a portion thereof protrudes horizontally beyond a side of the frame. The portion of the cathode current collector 15 protrudes horizontally beyond the side of the fame.

The bipolar plate 17 may be disposed between the cathode current collector 15 and the cathode 13. The bipolar plate 17 is made of a material such as graphite, carbon, and carbon plastic, and has high electrical conductivity and high acid resistance. The bipolar plate 17 is electrically connected to the cathode current collector 15 and the cathode 13 to allow electrons to migrate between the cathode current collector 15 and the cathode 13, but to prevent the cathode current collector 15 from being oxidized by the electrolyte of the cathode 13. The bipolar plate 17 may be formed by coating the material such as graphite, carbon, and carbon plastic on the cathode current collector 15.

Referring to FIG. 2, the portion of each of the anode current collector 14 and the cathode current collector 15 protrudes beyond the side of the frame 11. In this regard, the portion of the anode current collector 14 and the portion of the cathode current collector 15 protrude in opposite directions to each other. That is, a portion of the anode current collector 14 protrudes beyond one side of the frame 11, while the portion of the cathode current collector 15 protrudes beyond an opposite side of the frame 11 to one side thereof beyond the anode current collector 14 protrudes.

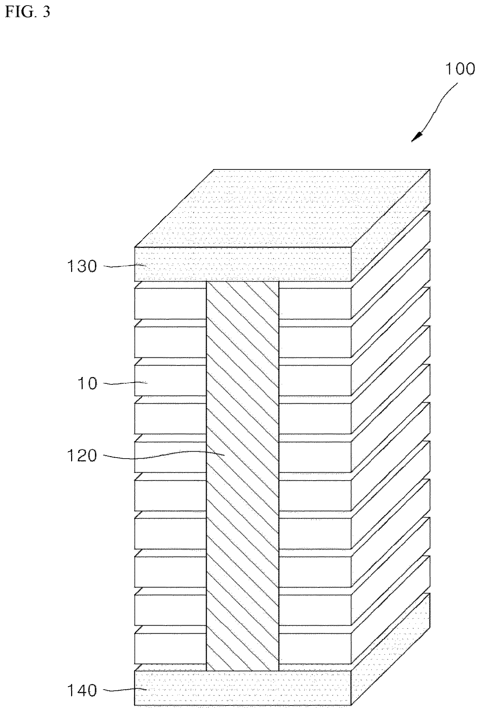

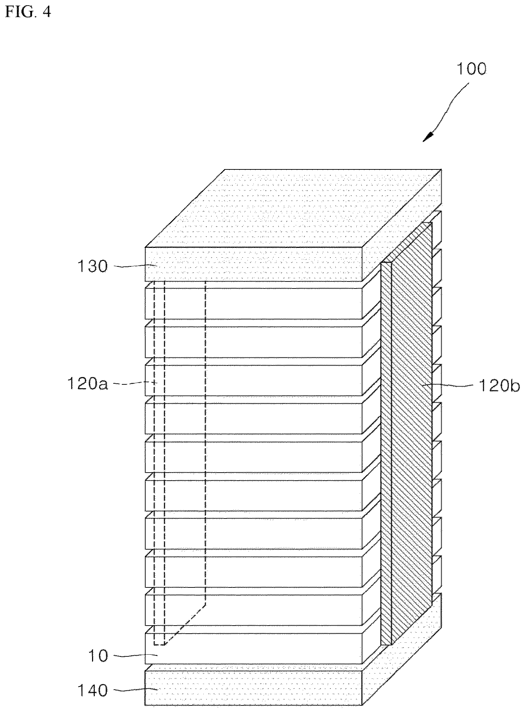

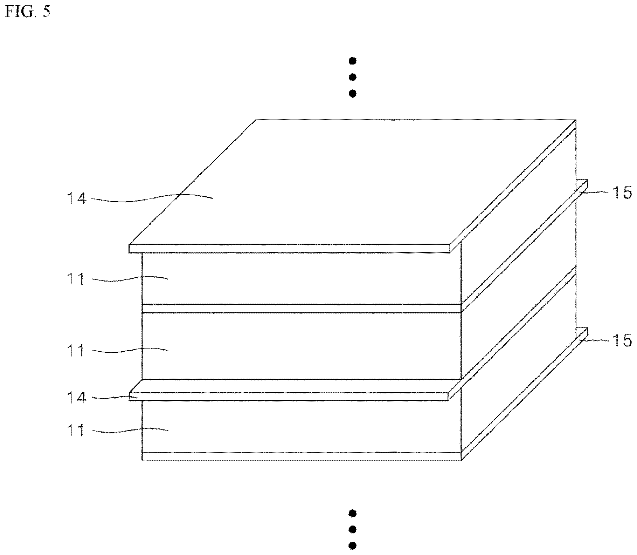

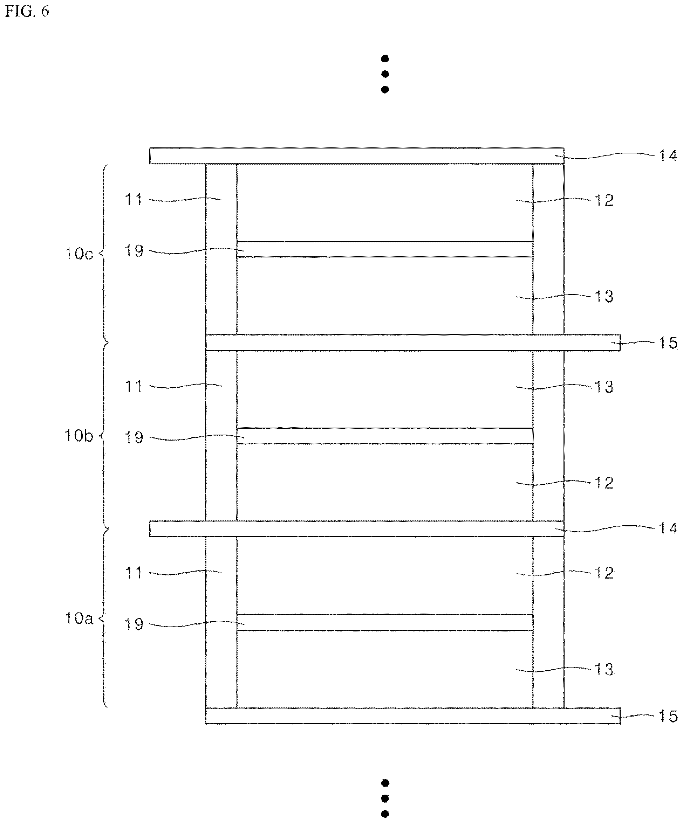

FIG. 3 and FIG. 4 are perspective views of a secondary battery module according to an embodiment of the present disclosure, FIG. 5 is a partial perspective view of a secondary battery module according to an embodiment of the present disclosure, and FIG. 6 is a partial cross-sectional view of a secondary battery module according to an embodiment of the present disclosure.

A secondary battery module 100 according to an embodiment of the present disclosure includes a plurality of layers 10 in which an oxidation-reduction reaction occurs and which are stacked vertically, a pair of busbars 120 electrically connecting the plurality of layers 10 to each other, an upper end plate 130 disposed on top of the plurality of layers 10 and a lower end plate 140 disposed under the plurality of layers 10.

The plurality of layers 10 are stacked vertically (in a height direction or the gravity direction). The secondary battery module 100 according to the present disclosure may relatively well withstand a pressure applied thereto in the vertical direction (the stacking direction), but is vulnerable to a pressure applied thereto in a horizontal direction perpendicular to the stacking direction. Thus, the secondary battery module 100 is constructed such that the plurality of layers 10 are arranged vertically. Furthermore, when the plurality of layers 10 are arranged in the vertical direction, it is easy to withdraw each secondary battery module 100 in maintenance. A stack of the plurality of layers 10 stacked in the vertical direction may have a rectangular parallelepiped shape with a large height.

The upper end plate 130 and the lower end plate 140 are respectively disposed on both opposing ends in the vertical direction of the stack of the plurality of layers 10. The upper end plate 130 is disposed on top of the stack of the plurality of layers 10, and the lower end plate 140 is disposed under the stack of the plurality of layers 10. The pair of busbars 120 are respectively disposed on both opposing side surfaces of the stack of the plurality of layers 10.

One anode current collector 14 is disposed between adjacent ones of the plurality of layers 10, and then one cathode current collector 15 is disposed between next adjacent ones of the plurality of layers 10. That is, one anode current collector 14 is disposed between a pair of adjacent anodes 12, and one cathode current collector 15 is disposed between a pair of adjacent cathodes 13.

Referring to FIG. 6, the anode 12 of one layer 10 of the plurality of layers 10 is stacked under the anode 12 of another adjacent layer 10. The cathode 13 of the another adjacent layer 10 is stacked under the cathode 13 of still another adjacent layer 10 to the another adjacent layer 10. Therefore, adjacent ones of the plurality of layers 10 share one anode current collector 14 or the cathode current collector 15. One anode current collector 14 among the plurality of anode current collectors 14 is disposed between the pair of anodes 12 adjacent to each other. One cathode current collector 15 among the plurality of cathode current collectors 15 is disposed between a pair of cathodes 13 adjacent to each other.

Referring to FIG. 6, the plurality of layers 10 are vertically arranged so that the anode 12 of a first battery cell 10a is adjacent to the anode 12 of a second battery cell 10b while the anode current collector 14 is disposed therebetween, the cathode 13 of the second battery cell 10b is adjacent to the cathode 13 of the third battery cell 10c while the cathode current collector 15 is disposed therebetween.

Referring to FIG. 5, each of the plurality of anode current collectors 14 and the plurality of cathode current collectors 15 partially protrudes beyond each of both opposing sides of the frames of the plurality of layers 10. In other words, a portion of each of the plurality of anode current collectors 14 protrudes beyond one side of the frame 11 of each of the plurality of layers 10, while a portion of each of the plurality of cathode current collectors 15 protrudes beyond an opposite side to the one side of the frame 11 of each of the plurality of layers 10 (beyond which the portion of each of the plurality of anode current collectors 14 protrudes).

Each of the pair of busbars 120 extends in an elongate manner in the vertical direction (in the stacking direction of the plurality of layers 10), and has a shape of an elongate bar or plate extending in one direction. Each of the pair of busbars 120 extends vertically along a longitudinal direction thereof.

A height of the busbar 120 is larger than a height of the stack of the plurality of layers 10. A vertical level of a top of each of the pair of busbars 120 is higher than a vertical level of a top of the stack of the plurality of layers 10, while a vertical level of a bottom each of the pair of busbars 120 is lower than a vertical level of a bottom of the stack of the plurality of layers 10. An upper end of each of the pair of busbars 120 may be in contact with the upper end plate 130, and a lower end thereof may be in contact with the lower end plate 140. An insulator may be disposed between the pair of busbars 120 and the upper end plate 130 and/or between the pair of busbars 120 and the lower end plate 140.

The pair of busbars 120 are respectively disposed on both opposing side surface of the stack of the plurality of layers 10 and electrically connect the plurality of layers 10 to each other. In this embodiment, the busbar 120 connects the plurality of layers 10 in parallel to each other. An insulator may be disposed between each of the pair of busbars 120 and each of both opposing side surfaces of the stack of the plurality of layers 10.

The pair of busbars 120 are respectively disposed on both opposing side surfaces of the sack of the plurality of layers 10. One busbar 120 of the pair of busbars 120 is disposed on one side surface of the stack of the plurality of layers 10, and the other busbar 120 thereof is disposed on the other side surface of the stack of the plurality of layers 10 opposite to the side surface (on which one busbar 120 is disposed).

The pair of busbars 120 may fasten the plurality of layers 10 to each other. The busbars 120 may be coupled to the upper end plate 130 and the lower end plate 140 to fasten the plurality of layers 10 to each other.

The pair of busbars 120 includes a first busbar 120a that electrically connects the plurality of anode current collectors 14 to each other and a second busbar 120b that electrically connects the plurality of cathode current collectors 15 to each other. The first busbar 120a is disposed on one side surface of the stack of the plurality of layers 10, and the second busbar 120b is disposed on the opposite side to the side surface of the stack of the plurality of layers 10 where the first busbar 120a is disposed.

The portion of each of the plurality of anode current collectors 14 protruding beyond the side of the frame of each of the plurality of layers 10 is bent so as to be connected to the first busbar 120a. A portion of each of the plurality of cathode current collectors 15 protruding beyond the side of the frame of each of the plurality of layers 10 is bent so as to be connected to the second busbar 120b.

The upper end plate 130 and the lower end plate 140 are disposed on both opposing ends in the stacking direction, that is, the top and the bottom of the stack of the layers 10, respectively. Each of the upper end plate 130 and the lower end plate 140 may have a rectangular parallelepiped shape with a small height. According to an embodiment, each of the upper end plate 130 and the lower end plate 140 may have various three-dimensional shapes in which upper and lower surfaces are parallel to each other. Each of the upper end plate 130 and the lower end plate 140 may be made of a high-strength inorganic compound material (such as cement), or a high-strength organic compound material (such as engineering plastic), or may be made of a mixture of an insulator coated metal and the cement.

The upper end plate 130 and the lower end plate 140 may respectively protect the top and the bottom of the stack of the plurality of layers 10. The upper end plate 130 and the lower end plate 140 together with fastening means (fastener) may press the stack of the plurality of layers 10 to fasten the stack. In this embodiment, the fastening means may be embodied as the busbar 120. According to an embodiment, the fastening means may be a band or tie that surrounds and fastens the upper end plate 130, the plurality of layers 10, and the lower end plate 140 to each other.

The upper end plate 130 and/or the lower end plate 140 may protrude horizontally beyond the side of the stack of the plurality of layers 10. Since the plurality of secondary battery modules 100 are arranged densely in the horizontal direction, respective adjacent upper end plates 130 and/or lower end plates 140 of adjacent ones of the secondary battery module 100 are arranged horizontally and are in close contact with each other such that the horizontally adjacent ones of the plurality of layers 10 are not in close contact with each other. In the plurality of secondary battery modules 100 arranged densely in the horizontal direction, horizontally adjacent upper end plates 130 and/or lower end plates 140 may be in close contact with each other such that two layers of the plurality of layers 10 adjacent to each other in the horizontal direction may be spaced apart from each other.

The secondary battery module 100 has a substantially rectangular shape that extends in an elongate manner in the vertical direction. The stacking direction of the layers 10 in the secondary battery module 100 is the height direction thereof.

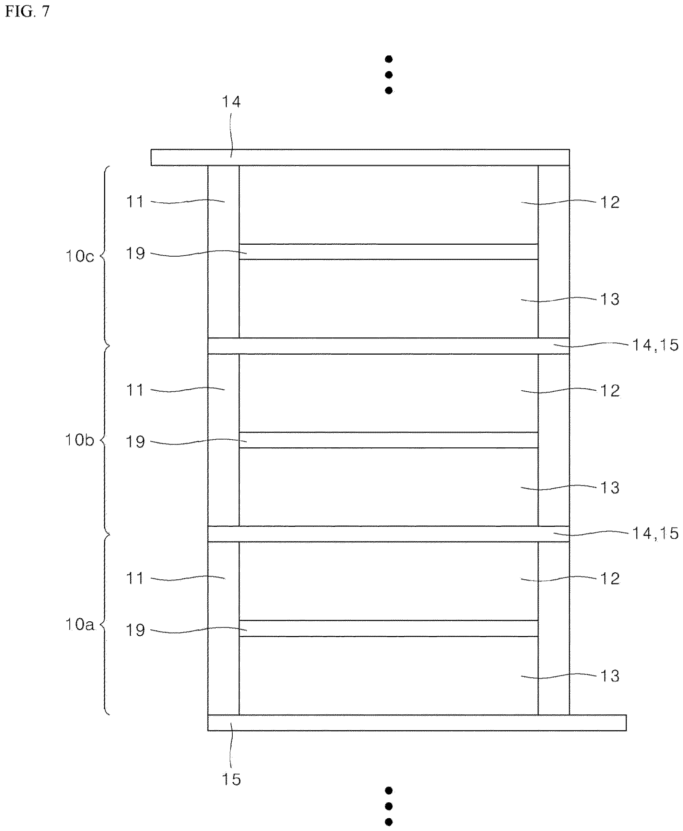

FIG. 7 is a partial cross-sectional view of a secondary battery module according to another embodiment of the present disclosure.

According to another embodiment of the present disclosure, the anode 12 of one layer 10 of the plurality of layers 10 is stacked under the cathode 13 of another adjacent layer 10. The current collectors 14 and 15 are disposed between the anode 12 and the cathode 13 which are adjacent to each other in the vertical direction.

Referring to FIG. 7, the plurality of layers 10 are constructed such that the anode 12 of the first battery cell 10a is stacked under the cathode 13 of the second battery cell 10b while the current collectors 14 and 15 are disposed therebetween, and the anode 12 of the second battery cell 10b is stacked under the cathode 13 of the third battery cell 10c while the current collectors 14 and 15 are disposed therebetween. In this case, the plurality of layers 10 are connected in series with each other.

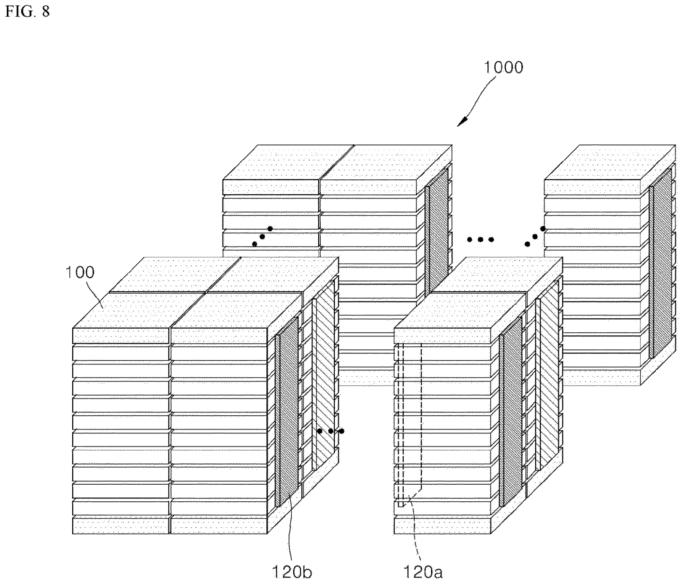

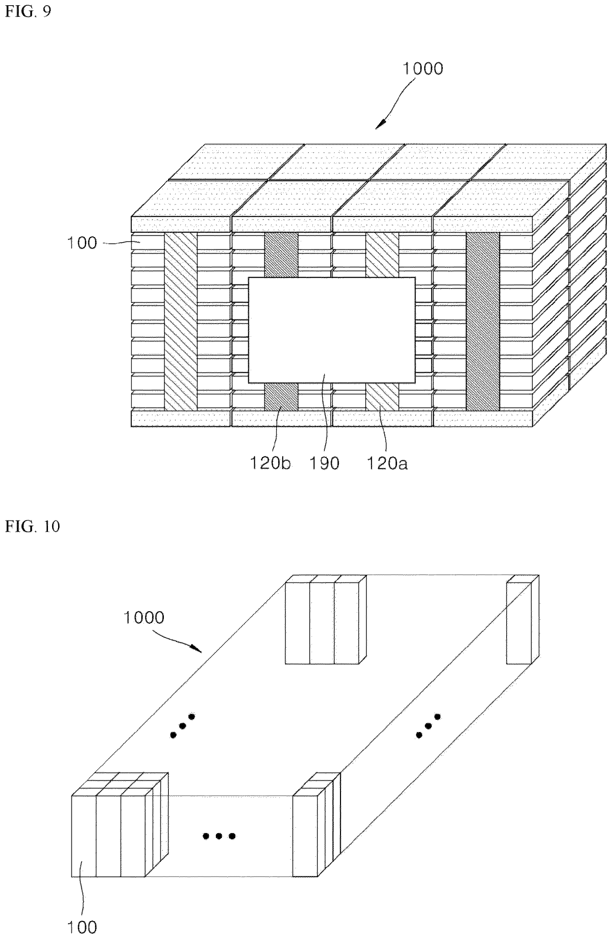

FIG. 8 and FIG. 9 are diagrams showing a state in which the plurality of secondary battery modules are arranged horizontally according to an embodiment of the present disclosure, and FIG. 10 is a diagram of a schematic configuration of a secondary battery according to an embodiment of the present disclosure.

A secondary battery 1000 according to an embodiment of the present disclosure includes a plurality of secondary battery modules 100 arranged densely in the horizontal direction.

The secondary battery 1000 refers to a secondary battery pack or an energy storage system (ESS) composed of the plurality of secondary battery modules 100.

The plurality of secondary battery modules 100 are arranged densely in the horizontal direction. The secondary battery module 100 according to the present disclosure generates little heat, does not require a fluid flow path for cooling, and has a simple structure. Accordingly, the plurality of secondary battery modules 100 may be arranged densely in the horizontal direction.

Respective adjacent busbars of adjacent respective pairs of busbars 120 of adjacent secondary battery modules 100 contact with each other such that the plurality of secondary battery modules 100 may be electrically connected to each other. Referring to FIG. 8, the first busbar 120a of one secondary battery module 100 among the plurality of secondary battery modules 100 contacts the second busbar 120b of the secondary battery module 100 adjacent thereto among the plurality of secondary battery modules 100 such that adjacent ones of the plurality of secondary battery modules 100 are electrically connected to each other. In this case, the plurality of secondary battery modules 100 are connected in series with each other.

In the plurality of secondary battery modules 100, respective adjacent busbars of adjacent respective pairs of busbars 120 of adjacent secondary battery modules 100 may be connected to each other via a common busbar 190. Referring to FIG. 9, the first busbar 120a of one secondary battery module 100 among the plurality of secondary battery modules 100 and the second busbar 120b of the secondary battery module 100 adjacent thereto among the plurality of secondary battery modules 100 are electrically connected to each other via the common busbar 190.

Referring to FIG. 10, the secondary battery modules 100 arranged densely horizontally constitute the secondary battery 1000.

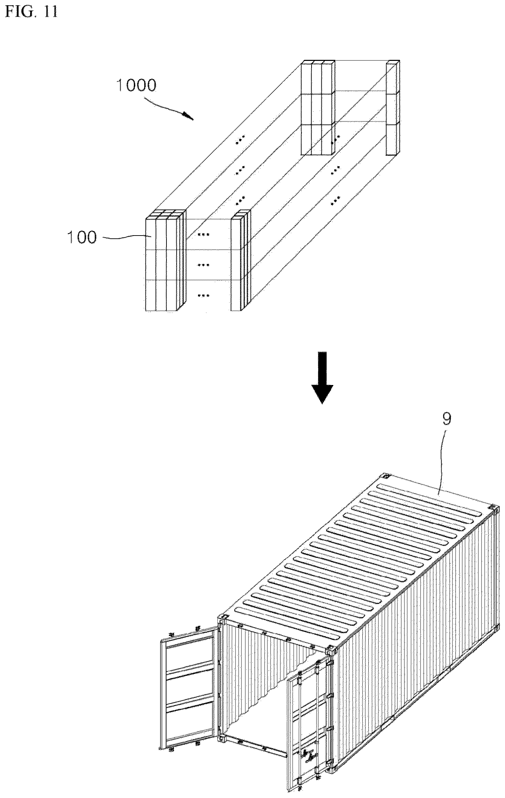

FIG. 11 is a diagram showing a state in which a plurality of secondary battery modules are stacked vertically according to an embodiment of the present disclosure.

Recently, the demand for the energy storage system for a ship is increasing. When the energy storage system is used for the ship, an arrangement of the secondary battery modules 100 appropriate for the application to the ship is required. The secondary battery 1000 according to an embodiment of the present disclosure further includes a container 9 in which a plurality of secondary battery modules 100 are accommodated. The container 9 is a standardized shipping container. Thus, a port container crane may be used when loading or unloading the energy storage system onto or from the ship.

When the plurality of secondary battery modules 100 are accommodated in the container 9 for the ship, the plurality of secondary battery modules 100 are arranged densely in the horizontal direction to form a horizontal arrangement, and a plurality of horizontal arrangements of the plurality of secondary battery modules 100 are arranged densely vertically. Although the plurality of secondary battery modules 100 are stacked vertically, the vertical stack may withstand the pressure relatively well. Therefore, when the plurality of secondary battery modules 100 are accommodated in a tall casing such as the shipping container 9, the plurality of secondary battery modules 100 are stacked vertically.

The horizontal arrangement of the plurality of secondary battery modules 100 arranged in the horizontal direction may be accommodated in a housing (or casing), and a plurality of housings or casings may be stacked vertically. Furthermore, a plate supporting the plurality of secondary battery modules 100 in the same layer may be provided between the layers. The plurality of secondary battery modules 100 in the same layer may be moved in a horizontally sliding manner, and may be stored into or removed from the shipping container 9 or casing.

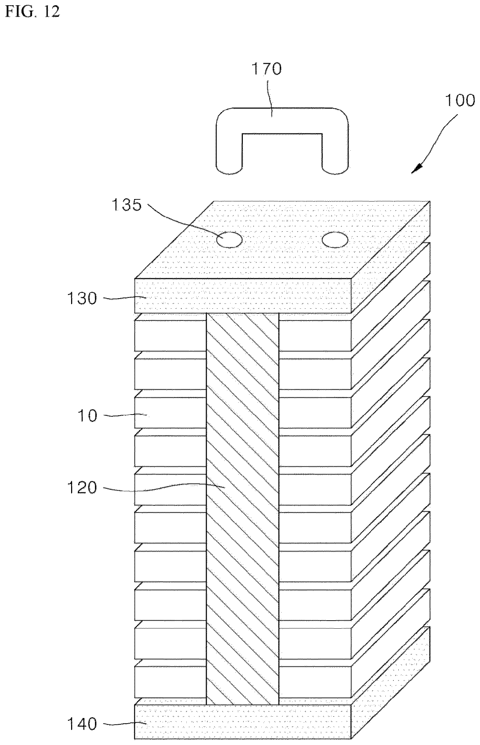

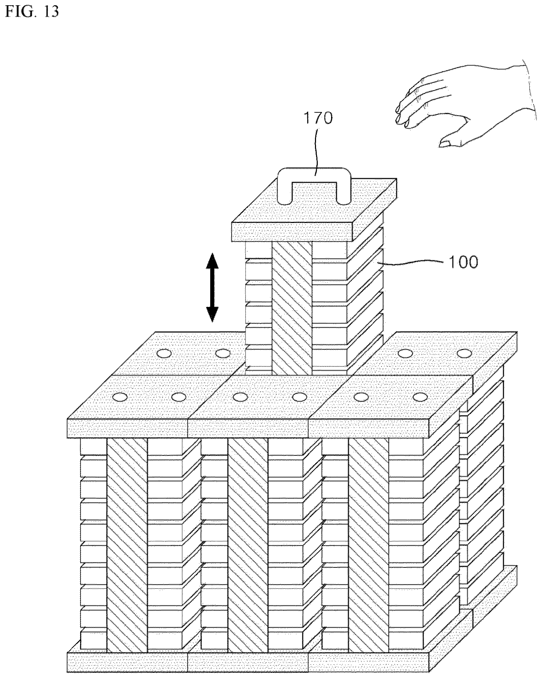

FIG. 12 is a perspective view of a secondary battery module according to an embodiment of the present disclosure, and FIG. 13 is an example of use of a secondary battery module according to an embodiment of the present disclosure.

The secondary battery module 100 according to an embodiment of the present disclosure further includes a handle 170 connected to the upper end plate 130. The handle 170 is removably connected to the upper end plate 130. The handle 170 allows a user to grasp and withdraw or store the secondary battery module 100 in the vertical direction. The upper end plate 130 may have handle coupling holes 135 defined therein to which the handle 170 is removably coupled.

Referring to FIG. 13, it may be necessary to withdraw the secondary battery module 100 for maintenance of the secondary battery 1000. The user connects the handle 170 to the secondary battery module 100 that requires the maintenance. The user may couple the handle 170 to the handle coupling holes 135 of the upper end plate 130, grasp the handle 170, and pull the handle upward to withdraw the corresponding secondary battery module 100. According to an embodiment, the handle 170 may be raised up with a crane or the like.

When storing the secondary battery module 100 again, the user grasps the handle 170 and moves the handle downwards to store the secondary battery module 100. After storing the secondary battery module 100, the user separates the handle 170 from the handle coupling holes 135 of the upper end plate 130.

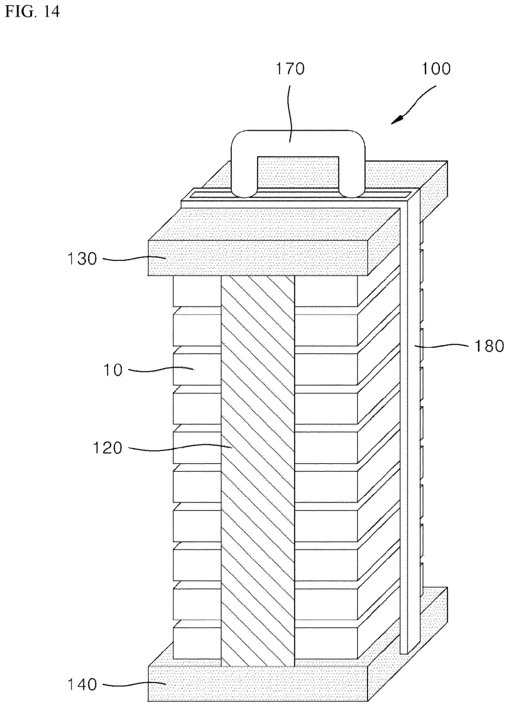

FIG. 14 is a perspective view of a secondary battery module according to another embodiment of the present disclosure.

The secondary battery module 100 according to another embodiment of the invention further includes a tie 180 that surrounds and fastens the plurality of layers 10, the upper end plate 130, and the lower end plate 140 to each other.

The tie 180 is formed in a ring shape and extends to surround both opposing sides and a top surface of the upper end plate 130, both opposing sides of the stack of the plurality of layers 10, and both opposing sides and a bottom surface of the lower end plate 140. The tie 180 is made of PP (polypropylene) or PET (polyethylene terephthalate), which has low elasticity, non-conductivity, and excellent heat and chemical resistance.

In this embodiment, the fastening means for fastening the plurality of layers 10, the upper end plate 130, and the lower end plate 140 to each other is embodied as the tie 180. The tie 180 presses and fastens the plurality of layers 10, the upper end plate 130, and the lower end plate 140 to each other.

The tie 180 is disposed on both opposing side surfaces of the stack of the plurality of layers 10 on which the pair of busbars 120 are not disposed. The tie 180 may include a plurality of ties. In this embodiment, the handle 170 may be removably connected to the tie 180.

According to an embodiment, a foldable handle 170 may be provided on a top of the tie 180, or a portion of the top of the tie 180 may serve as the handle 170.

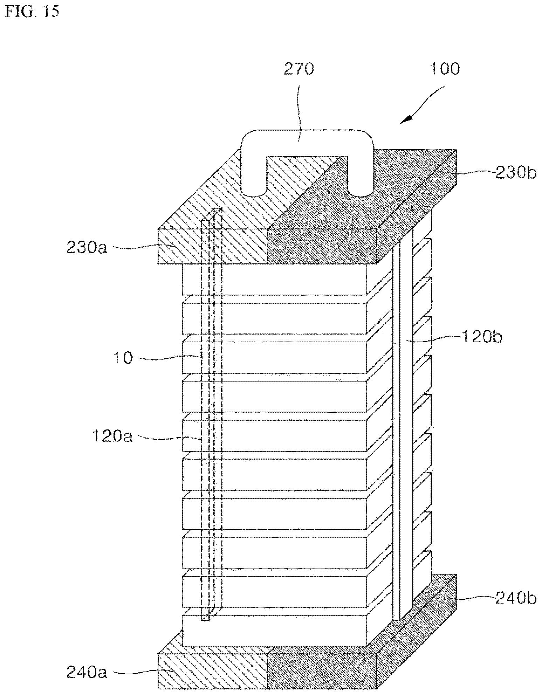

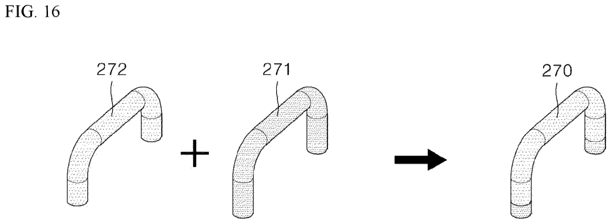

FIG. 15 is a perspective view of a secondary battery module according to still another embodiment of the present disclosure, and FIG. 16 is a diagram showing a structure of a handle according to still another embodiment of the present disclosure.

The secondary battery module 100 according to still another embodiment of the present disclosure includes a negative-electrode upper end plate 230a and a negative-electrode lower end plate 240a electrically connected to the first busbar 120a, and a positive-electrode upper end plate 230b and a positive-electrode lower end plate 240b connected to the second busbar 120b. In this embodiment, the handle 270 is connected to the secondary battery module 100 to short-circuit the secondary battery module 100.

As described above, the first busbar 120a and the second busbar 120b are connected to the anode current collector 14 and the cathode current collector 15. In this embodiment, the negative-electrode upper end plate 230a and the negative-electrode lower end plate 240a become a negative-electrode terminal when the secondary battery module 100 is discharged and become a positive-electrode terminal when the secondary battery module 100 is charged. The positive-electrode upper end plate 230b and the positive-electrode lower end plate 240b become a positive-electrode terminal when the secondary battery module 100 is discharged and become a negative-electrode terminal when the secondary battery module 100 is charged.

In this embodiment, the handle 270 includes a body 271 made of a conductive material (for example, metal), and a coated material 272 as an insulating material applied onto the body 271. The coated material 272 is applied to a portion of the body 271 held by the user to prevent electric shock to the user. Inside the body 271 of the handle 270, elements such as a switch, a resistor, and a capacitor may be included for safety.

A portion of the body of the handle 270 in contact with the negative-electrode upper end plate 230a and the positive-electrode upper end plate 230b is not coated with the coated material 272. Thus, when the handle 270 is connected to the negative-electrode upper end plate 230a and the positive-electrode upper end plate 230b, the negative-electrode upper end plate 230a and the positive-electrode upper end plate 230b are electrically connected to each other such that the secondary battery module 100 is short-circuited. Accordingly, even in a state in which the secondary battery module 100 has been charged, the handle 270 is connected thereto, such that the secondary battery module 100 is discharged. Thus, the user may safely withdraw the secondary battery module 100.

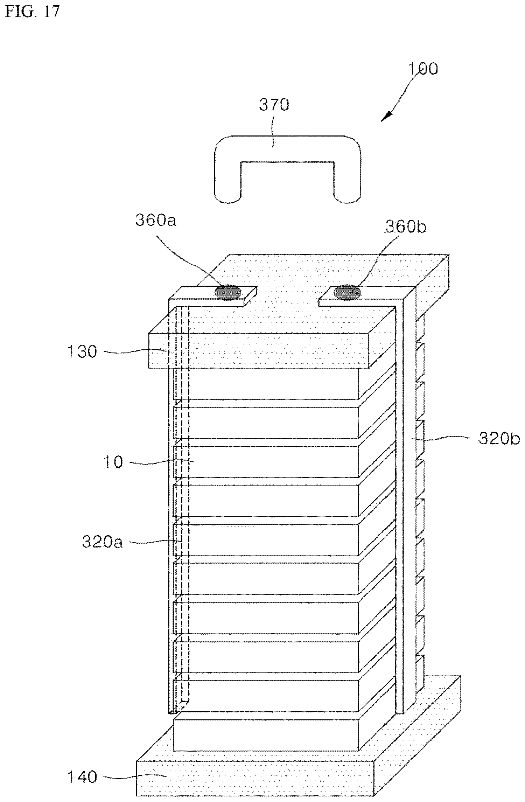

FIG. 17 is a perspective view of a secondary battery module according to still yet another embodiment of the present disclosure.

The secondary battery module 100 according to still yet another embodiment of the present disclosure includes a handle 370, a first busbar 320a, a second busbar 320b, a negative-electrode connection hole 360a formed in an extension of the first busbar 320a, and a positive-electrode connection hole 360b formed in an extension of the second busbar 320b. In this embodiment, the handle 370 short-circuits the secondary battery module 100 when the handle 370 is inserted to the negative-electrode connection hole 360a and the positive-electrode connection hole 360b.

The first busbar 320a and the second busbar 320b are connected to the anode current collector 14 and the cathode current collector 15, and accordingly, the extension having the negative-electrode connection hole 360a and the extension having the positive-electrode connection hole 360b are electrically connected to the anode current collectors 14 and the cathode current collectors 15 of the plurality of layers 10. The extension having the negative-electrode connection hole 360a becomes a negative-electrode terminal when the secondary battery module 100 is discharged, and becomes a positive-electrode terminal when the secondary battery module 100 is charged. The extension having the positive-electrode connection hole 360b becomes a positive-electrode terminal when the secondary battery module 100 is discharged and becomes a negative-electrode terminal when the secondary battery module 100 is charged.

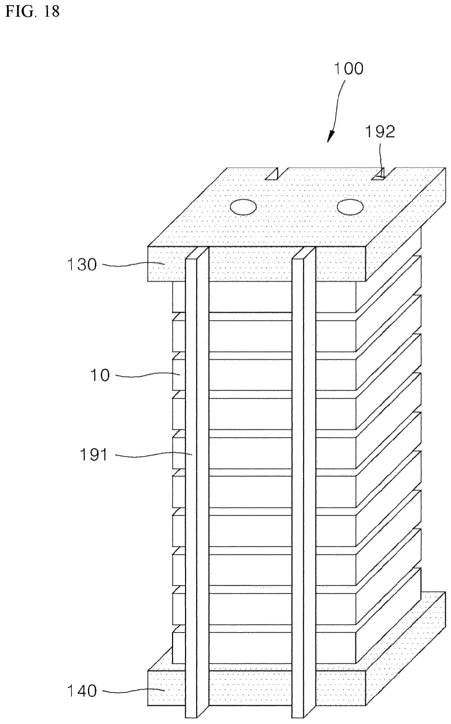

FIG. 18 is a perspective view of a secondary battery module according to still yet another embodiment of the present disclosure.

The secondary battery module 100 according to still yet another embodiment of the present disclosure further includes a guide 191 and 192 such that the secondary battery module 100 is coupled to another secondary battery module 100 adjacent thereto in a sliding manner. The guide 191 and 192 connects adjacent ones of the plurality of secondary battery modules 100 to each other and facilitate withdrawal and storage of the secondary battery module 100. The guide 191 and 192 extends vertically in a longitudinal direction thereof. Respective guides 191 and 192 of adjacent secondary battery modules 100 are coupled to each other in the sliding manner. The guide 191 and 192 may function as the busbar 120.

In this embodiment, the guide 191 and 192 may include a recessed groove 192 formed in each of the upper end plate 130 and the lower end plate 140, and a protrusion 191 protruding and extending along the upper end plate 130, the stack of the plurality of layers 10, and the lower end plate 140. The protrusion 191 of the secondary battery module 100 may be inserted into the groove 192 of another secondary battery module 100 adjacent thereto while the protrusion and the groove may be slidably coupled to each other.

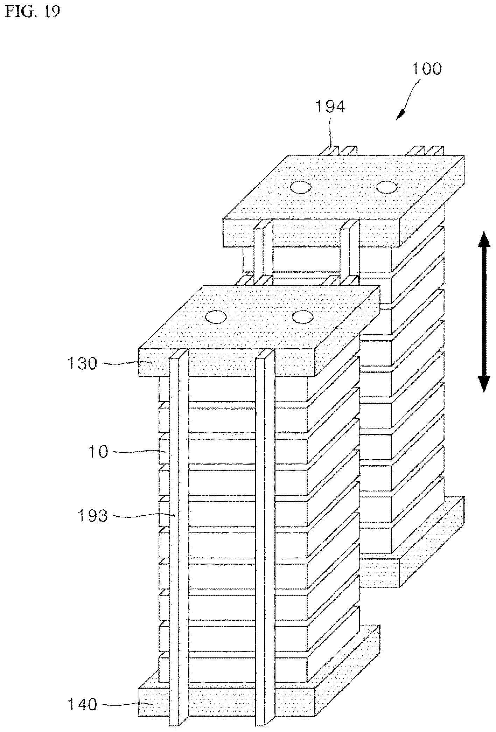

FIG. 19 is a perspective view of a secondary battery module according to still yet another embodiment of the present disclosure.

In this embodiment, the guide 191 and 192 may include a first guide 193 disposed on one side surface of the secondary battery module 100 and a second guide 194 disposed on the other side surface thereof. The first guide 193 of the secondary battery module 100 may be slidably coupled to the second guide 194 of the secondary battery module 100 adjacent thereto. Each of the first guide 193 and the second guide 194 may include a roller or a ball.

The first guide 193 and the second guide 194 may act as the second busbar 120b and the first busbar 120a, respectively. In this embodiment, the first guide 193 acts as the first busbar 120a, and the second guide 194 acts as the second busbar 120b.

Respective adjacent busbars of the respective pairs of busbars 120 of adjacent secondary battery modules 100 contact each other such that the adjacent secondary battery modules 100 are electrically connected to each other, and the two busbars 120 contacting each other support each other. In this embodiment, the first busbar 120a which is embodied as the first guide 193 is electrically connected to the second busbar 120b which is embodied as the second guide 194. The first bar 120a and the second busbar 120b support each other.

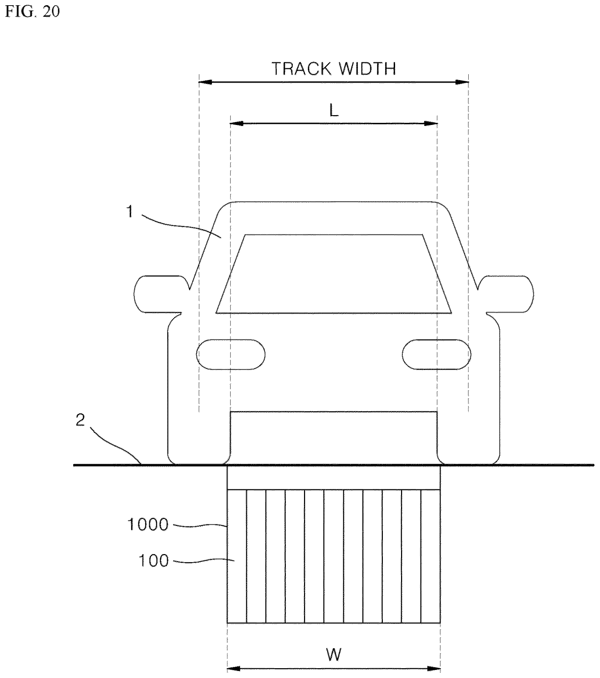

FIG. 20 is a diagram showing a schematic structure of a secondary battery according to an embodiment of the present disclosure.

The secondary battery 1000 according to an embodiment of the present disclosure includes a plurality of secondary battery modules 100 which are arranged horizontally. The plurality of secondary battery modules 100 is disposed under a bottom 2 supporting a charging target 1. The electrical energy stored in the plurality of secondary battery modules 100 is fed to the charging target 1.

The plurality of secondary battery modules 100 are disposed under the bottom 2 that supports the charging target 1 that the plurality of secondary battery modules 100 charges. In this embodiment, the charging target 1 may be a vehicle (electric vehicle or plug-in hybrid vehicle) 1. However, all of various power apparatuses or transportation means that require charging using the electric energy stored in the plurality of secondary battery modules 100 may be charging targets 1. The plurality of secondary battery modules 100 are arranged densely in the horizontal direction and disposed under the bottom 2 of a parking lot where the vehicle 1 is parked. When the bottom 2 is the ground, the plurality of secondary battery modules 100 are buried into the ground. When the bottom 2 is a bottom of each floor of a building, the secondary battery module 100 is disposed under a slab or is buried in the slab. All components of the secondary battery 1000 do not need to be disposed under the bottom 2, and a control module (a battery management system (BMS) or an energy management system (EMS), etc.) may be disposed on top of the bottom 2.

The horizontal arrangement of the plurality of secondary battery modules 100 according to the embodiment of the present disclosure has a width W smaller than a track of the vehicle 1 to which the electric energy stored in the plurality of secondary battery modules 100 is supplied, that is, the vehicle 1 to be charged.

Preferably, the width W of the horizontal arrangement of the plurality of secondary battery modules 100 may be smaller than a distance L between inner sides of both opposing tires of the vehicle so that the tires of the vehicle 1 vertically non-overlap the plurality of secondary battery modules 100.

The secondary battery module 100 is strong against the pressure acting in the vertical direction. However, the vehicle is very heavy, especially, the electric vehicle is further very heavy due to a weight of the battery. For this reason, the horizontal arrangement of the plurality of secondary battery modules 100 according to the embodiment of the present disclosure has the width W smaller than the track of the vehicle 1 or than the distance L between inner sides of both opposing tires of the vehicle so that the weight of the vehicle 1 is prevented from being transmitted to the secondary battery module 100.

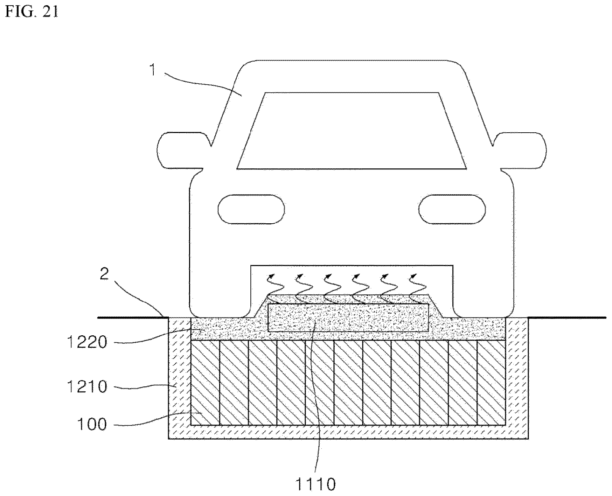

FIG. 21 is a diagram showing a schematic structure of a secondary battery according to an embodiment of the present disclosure.

The secondary battery 1000 according to the embodiment of the present disclosure includes a plurality of secondary battery modules 100 arranged horizontally, a housing 1210 surrounding the side surface and a bottom surface of the stack of the plurality of secondary battery modules 100, and a cover 1120 covering an upper surface of the housing 1210.

The housing 1210 is formed as a rectangular parallelepiped with an open top and accommodates the plurality of secondary battery modules 100 therein. The housing 1210 thermally insulates the plurality of secondary battery modules 100 to prevent the plurality of secondary battery modules 100 from being heated or cooled under external influences, and is waterproof to prevent water from penetrating the plurality of secondary battery modules 100. The housing 1210 may be made of a metal material as a base material and may further include a waterproofing material, an insulating material, and/or a heat insulating material coated thereon.

The cover 1220 is detachably coupled to the housing 1210. The cover 1220 covers the plurality of secondary battery modules 100. The cover 1220 may be made of a metal material as a base material and may further include a waterproofing material, an insulating material, and/or a heat insulating material coated thereon. A top portion of the cover 1220 may protrude from the bottom 2, or may be coplanar with the bottom 2. The top protruding portion of the cover 1220 may serve as a parking guide when a driver parks the vehicle 1. In the cover 1220, a control module 1110 that controls a wiring or a plurality of secondary battery modules 100 may be accommodated. The control module 1110 may include a battery management system BMS or an energy management system EMS.

According to an embodiment, the cover 1220 may heat the charging target 1 using a separate heating means or may heat the charging target 1 using the heat generated when the plurality of secondary battery modules 100 is discharged. A battery is accommodated in a bottom portion of the vehicle 1 as the object to be charged. The efficiency of the battery decreases at low temperatures. Thus, it is preferable that the cover 1220 heats the lower portion of the vehicle 1 so that the battery may be heated in a low temperature environment.

According to an embodiment, a solar panel may be installed on a top of the cover 1220. When the secondary battery 1000 is installed on bare land, the solar panel may absorb solar heat when there is no vehicle 1 on top thereof, such that the temperature of the plurality of secondary battery modules 100 is prevented from rising, and a solar panel charges the plurality of secondary battery modules 100.

An elastic means may be disposed on a bottom of the housing 1210 to provide elasticity to the plurality of secondary battery modules 100. The elastic means facilitates the withdrawal and storage of the secondary battery module 100 and may remove a difference between heights of the plurality of secondary battery modules 100.

According to an embodiment, the secondary battery 1000 may include a means for holding water therein in preparation for ignition of the lithium-ion battery built into the charging target such as the vehicle 1. In this embodiment, the anode 12 and the cathode 13 of the layer 10 contain water therein.

According to an embodiment, an anchor is provided on the bottom of the housing 1210 so that the anchor engages with the lower end plate 140 of the secondary battery module 100 to position the secondary battery module 100. Furthermore, the upper end plates 130 of the secondary battery modules 100 are respectively provided with block-shaped structures that are engaged each other, so that top surfaces of the plurality of secondary battery modules 100 may be coplanar with each other.

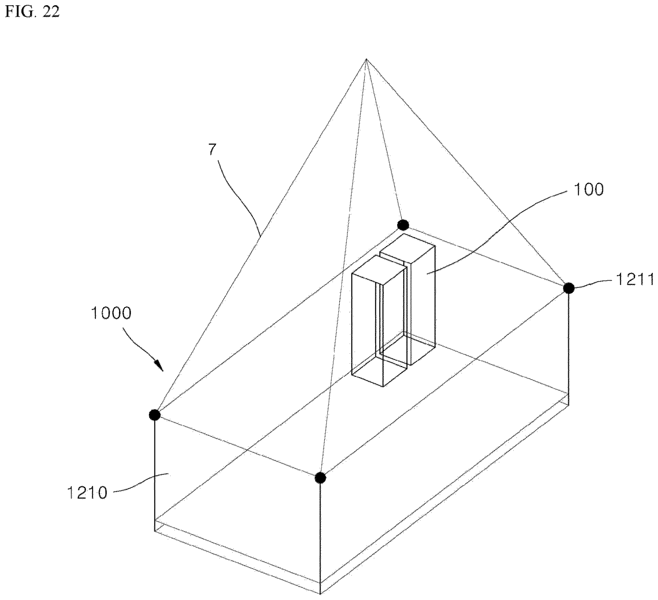

FIG. 22 is an example of transporting a secondary battery according to an embodiment of the present disclosure.

A connection portion 1211 to which a steel wire 7 is connected may be provided at each of upper corners of the housing 1210. When the secondary battery 1000 is first installed, the steel wire may be connected to the connection portion 1211 of the housing 1210 where the plurality of secondary battery modules 100 are accommodated and the steel wire 7 may be connected to a crane. Thus, the operator may move the housing 1210 using the crane.

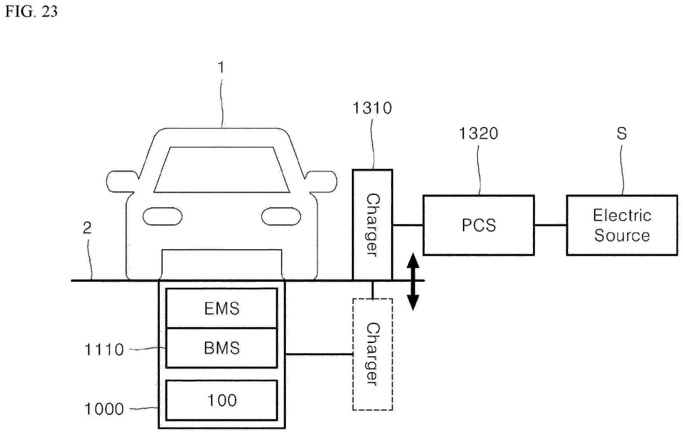

FIG. 23 is a diagram showing a schematic configuration of a charging system including a secondary battery according to an embodiment of the present disclosure.

The charging system according to the embodiment of the present disclosure includes the secondary battery 1000, a charger 1310 that is connected to the charging target 1 such as the vehicle and supplies electrical energy of the secondary battery 1000 to the charging target 1 such as the vehicle, and a power conversion system (PCS) 1320 which converts alternating current electricity supplied from an external power source S into direct current electricity.

The power conversion system 1320 is connected to the charger 1310, and the secondary battery 1000 is connected to the charger 1310, and receives the direct current electricity from the power conversion system 1320 through the charger 1310.

The charger 1310 may be raised and lowered. Thus, when the charger is to be connected to the charging target 1 such as the vehicle, the charger 1310 rises so as to be disposed on top of the bottom 2. When the charger is not removed from the charging target 1 such as the vehicle, the charger 1310 may descend so as to be disposed under the bottom 2. The power conversion system 1320 may be disposed under the bottom 2.

The secondary battery 1000 includes the plurality of secondary battery modules 100 and the control module 1110 that controls the plurality of secondary battery modules 100. The control module 1110 may include a battery management system BMS and/or an energy management system EMS. The control module 1110 may be disposed between bottom 2 and the plurality of secondary battery modules 100. The control module 1110 may be disposed inside the cover 1220 as described above.

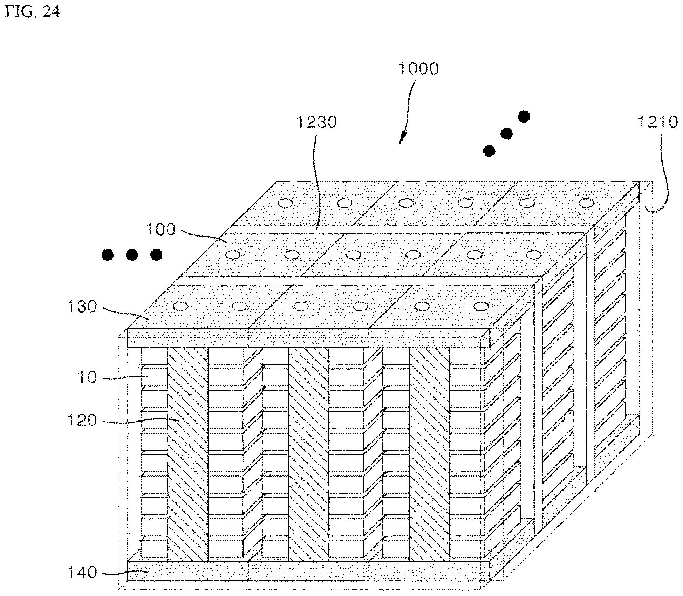

FIGS. 24 to 26 are diagrams showing a schematic structure of a secondary battery according to still another embodiment of the present disclosure.

The secondary battery 1000 may further include a supporter 1230 that is provided in an inner space of the housing 1210 and supports a portion of a side surface of each of the plurality of secondary battery modules 100. The supporter 1230 may be slidably combined with the plurality of secondary battery modules 100. The supporter 1230 may guide the secondary battery module 100 so that the secondary battery module 100 slides in the vertical direction when the secondary battery module 100 is withdrawn or stored from or into the housing. The secondary battery module 100 may include a guide that is slidably coupled with the supporter 1230. The busbar 120 may act as the guide. The supporter 1230 may include a roller or a ball.

Referring to FIG. 24, the supporter 1230 may be formed in a shape of an upright plate disposed between adjacent rows of the stacks of the plurality of secondary battery modules 100.

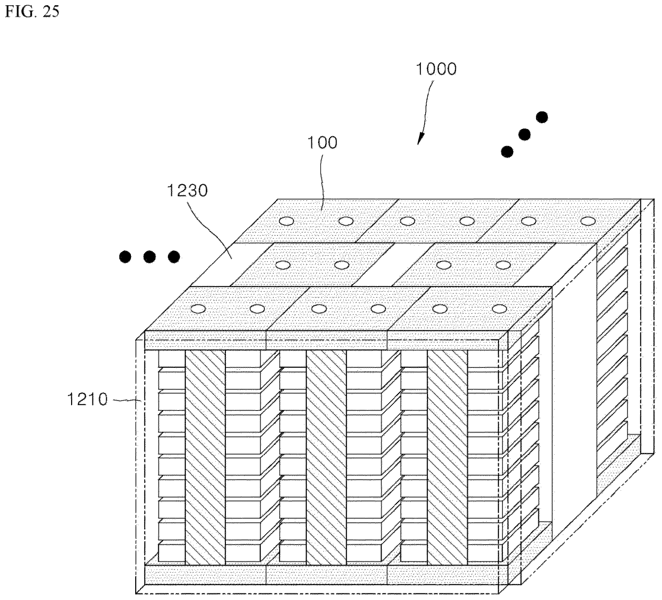

Referring to FIG. 25, the supporter 1230 may be formed in a column shape disposed between adjacent stacks of the plurality of secondary battery modules 100. A lower surface of the column-shaped supporter 1230 may be embedded in the ground and thus the supporter may serve as a pile.

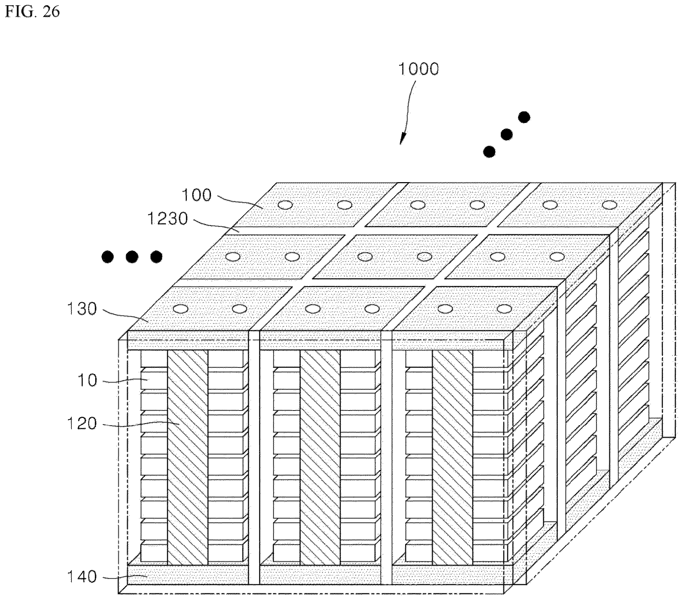

Referring to FIG. 26, in a plan view, the supporter 1230 may be arranged in a grid manner. Each of the plurality of secondary battery modules 100 may be disposed between portions of the supporter intersecting each other.

In this embodiment, when the electrolyte leaks from one of the plurality of secondary battery modules 100, the supporter 1230 prevents the electrolyte from leaking from one secondary battery module 100 from flowing to another secondary battery module 100 adjacent thereto. Furthermore, the supporter 1230 guides the secondary battery module 100 so that a position thereof is aligned correctly when withdrawing and storing the secondary battery module 100 from and into the housing.

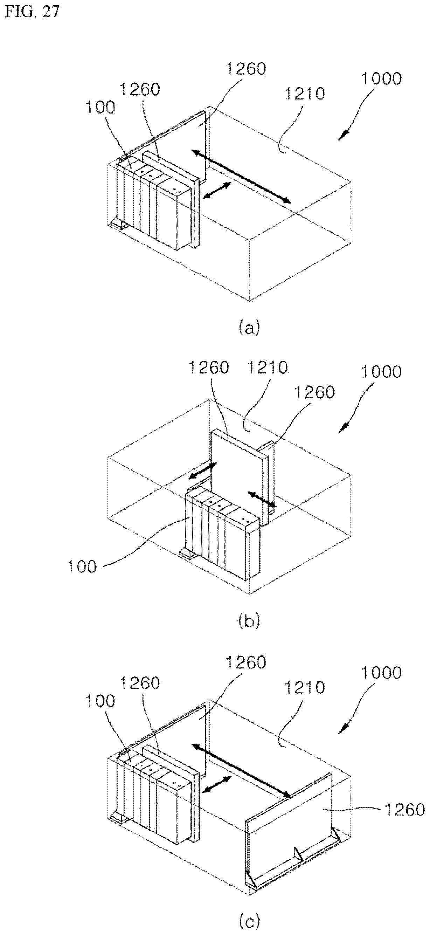

FIGS. 27 to 31 are diagrams showing a schematic structure of a secondary battery according to still yet another embodiment of the present disclosure.

In this embodiment, the secondary battery 1000 may further include a guide wall 1260 supporting a side surface of each of at least some of the stacks of the plurality of secondary battery modules 100.

The guide wall 1260 is in a form of a plate-shaped wall and is constructed to be able to stand on its own. When installing or removing the plurality of secondary battery modules 100, the guide wall 1260 guides a placement position of each of the plurality of secondary battery modules 100 and supports each of the plurality of secondary battery modules 100 to prevent each of the plurality of secondary battery modules 100 from falling. The guide wall 1260 may include a plurality of guide walls which may be arranged so as to intersect each other in a plan view. The guide wall 1260 may be provided as a pair of guide walls which may extend in the same direction. The guide wall 1260 is installed only when installing or removing the plurality of secondary battery modules 100. The guide wall 1260 may be removed after the installing or removing work of the plurality of secondary battery modules 100 has been completed. According to an embodiment, after the installing or removing work of the plurality of secondary battery modules 100 has been completed, the guide wall 1260 may not be removed but may be disposed on one inner side surface of the housing 1210.

An inner bottom surface of the housing 1210 may be treated to have a low coefficient of friction to facilitate smooth movement of the guide wall 1260 along and on the inner bottom surface of the housing 1210. According to an embodiment, the inner bottom surface of the housing 1210 may be coated with a coating material (not shown) with a low coefficient of friction.

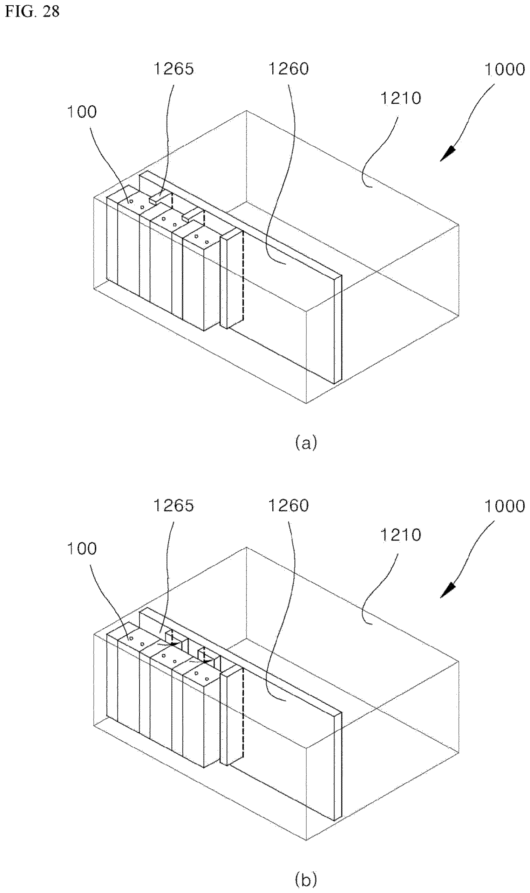

Referring to FIG. 28, the guide wall 1260 may include a pivotable wing member 1265.

The wing member 1265 may be pivotably connected to the guide wall 1260 and may extend in a direction perpendicular to the guide wall 1260. The wing member 1265 may pivot from the guide wall 1260 to support at least one of the stacks of the plurality of secondary battery modules 100. The wing member 1265 may support a side surface not supported with the guide wall 1260 of at least one of the stacks of the plurality of secondary battery modules 100. A vertical level of a top of the wing member 1265 may be higher than a vertical level of a top of each of the plurality of secondary battery modules 100.

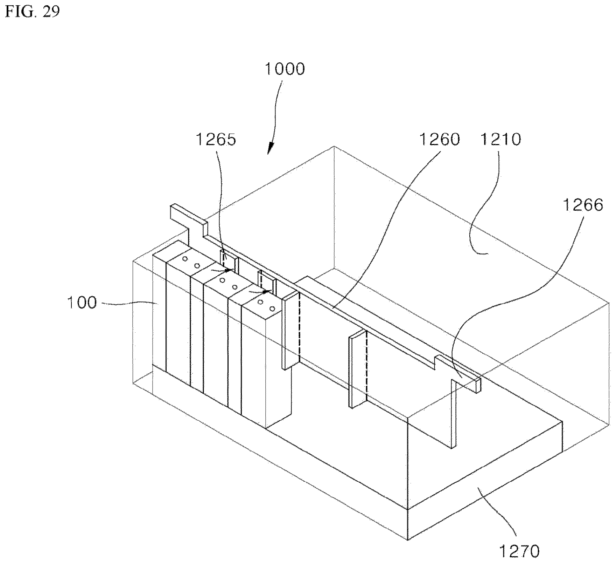

Referring to FIG. 29, the guide wall 1260 may further include a step portion 1266 that is supported on a top of the housing 1210.

The step portion 1266 is supported on the top of the housing 1210 when the guide wall 1260 is installed in the housing 1210, thereby allowing the guide wall 1260 to stand upright on its own, and may serve as a handle such as a jig used for moving the guide wall 1260.

When the step portion 1266 is supported on the top of the housing 1210, a vertical level of the top of the guide wall 1260 may be higher than a vertical level of the top of each of the plurality of secondary battery modules 100.

Furthermore, the secondary battery 1000 may further include a bottom member 1270 disposed on an inner bottom surface of the housing 1210. The bottom member 1270 may be elastic and may absorb shock when placing the secondary battery module 100 into the housing. The bottom member may absorb the electrolyte leaking from the plurality of layers 10. The bottom member 1270 may absorb the electrolyte leaking from the plurality of layers 10.

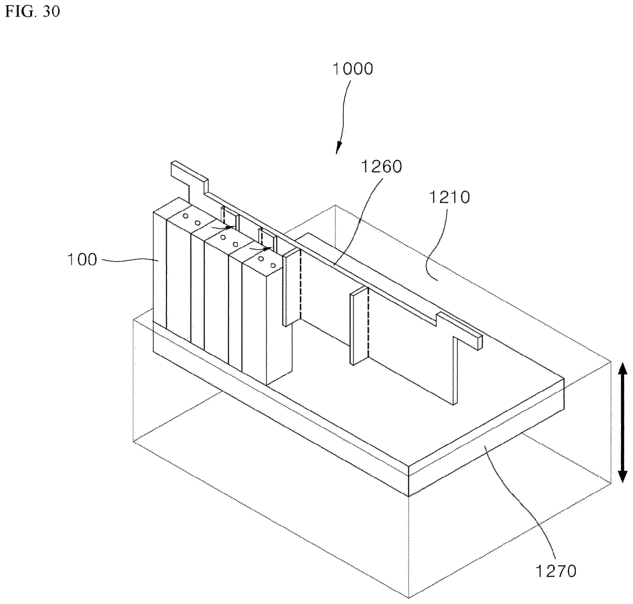

Referring to FIG. 30, the bottom member 1270 may be movable vertically. The bottom member 1270 may be raised from the bottom of the housing 1210 to allow the plurality of secondary battery modules 100 and the guide wall 1260 to be displaced toward the top of the housing 1210.

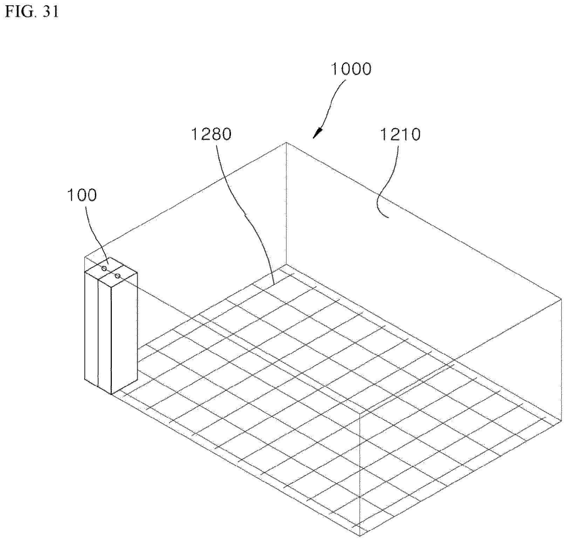

Referring to FIG. 31, the bottom or the bottom member 1270 of the housing 1210 may have a guide protrusion 1280 that guides a position of each of the plurality of secondary battery modules 100 when each module 100 is placed into the housing. The guide protrusion 1280 protrudes upwardly from the bottom of the housing 1210 or the bottom member 1270 to guide the placement position of each of the plurality of secondary battery modules 100 and adjust a spacing between adjacent ones of the plurality of secondary battery modules 100.

According to an embodiment, a ceiling of the housing 1210 or a cover 1220 that covers the upper surface of the housing 1210 may have a guide protrusion protruding downwardly therefrom to prevent each of the plurality of secondary battery modules 100 from being tilted and to adjust a spacing between adjacent ones of the plurality of secondary battery modules 100.

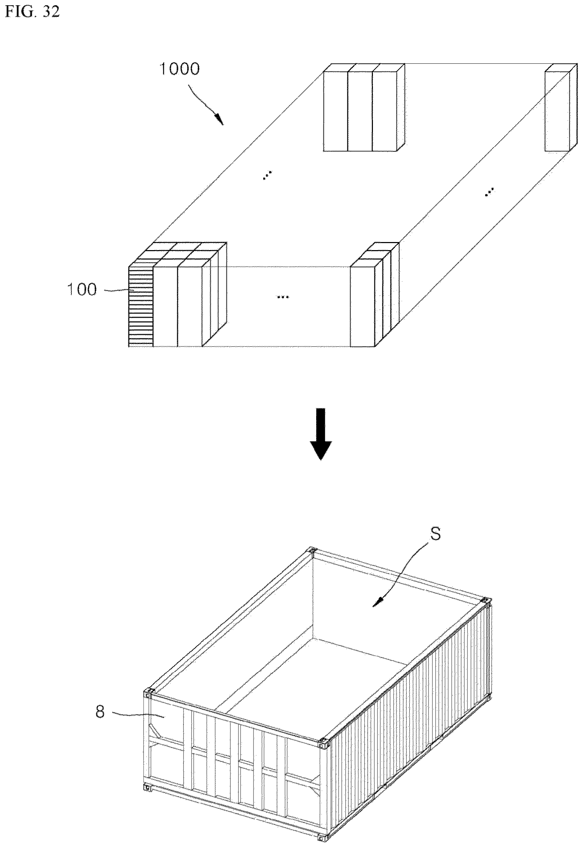

FIGS. 32 to 35 are diagrams showing a schematic structure of a plurality of secondary battery modules according to still yet another embodiment of the present disclosure.

In this embodiment, the secondary battery 1000 includes a container 8 with an internal accommodation space S formed therein, and a plurality of secondary battery modules 100 horizontally arranged in the internal accommodation space S of the container 8. In each of the plurality of secondary battery module 100, the plurality of layers 10 are stacked vertically.

In this embodiment, the container 8 is a 20ft half container. The container 8 is 6,058mm long, 2,438mm wide, and 1,280mm high, and the accommodation space S is preferably 13.4m³. The container 8 containing therein the plurality of secondary battery modules 100 may be disposed on the ground, in an underground manner, or loaded on a ship.

It is preferable that the plurality of secondary battery modules 100 are arranged densely in the horizontal direction so as to sufficiently fill a length in a horizontal direction of the accommodation space S of the container 8. Each of the plurality of secondary battery modules 100 is constructed to have a height smaller than a height of the accommodation space S of the container 8. It is desirable that a service space V is formed on the top of the horizontal arrangement of the plurality of secondary battery modules 100.

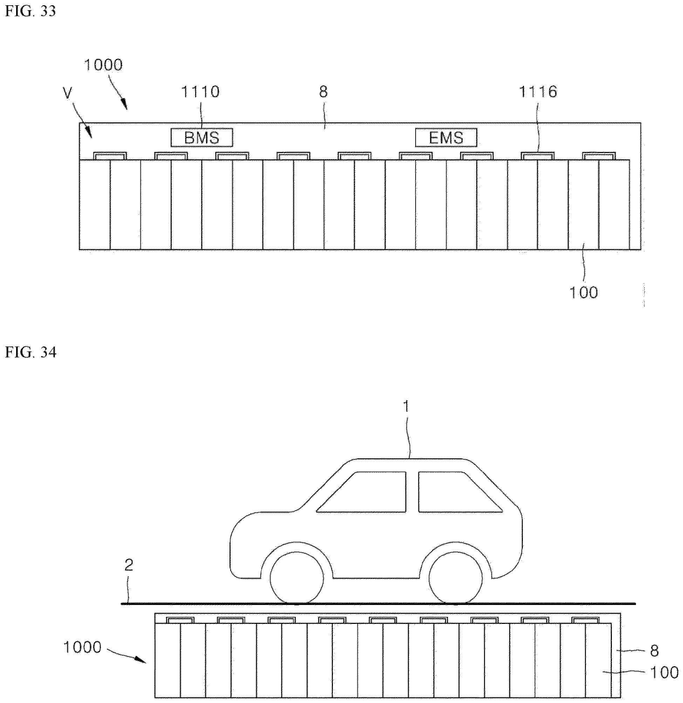

Referring to FIG. 33, a module busbar 1160 that electrically connects adjacent ones of the plurality of secondary battery modules 100 to each other, and a control module 1110 such as a battery management system BMS or an energy management system EMS may be disposed in the service space V.

In the service space V, a structure that may collect and remove gas that may be generated in the plurality of layers 10 or discharge the gas to the outside may be formed. It is desirable that a direction in which the shortest path along which the gas generated in the layer 10 travels extends is perpendicular to the arrangement direction of the plurality of secondary battery modules 100.

According to an embodiment, the control module 1110 such as a master battery management system may be disposed in a portion of a space where the secondary battery module 100 may be disposed.

According to an embodiment, another container 8 accommodating therein the plurality of secondary battery modules 100 may be stacked on top of the container 8 accommodating the plurality of secondary battery modules 100.

Referring to FIG. 34, the secondary battery 1000 may be disposed under the bottom 2 that supports the charging target 1. The container 8 accommodating therein the plurality of secondary battery modules 100 may be disposed under the bottom 2.

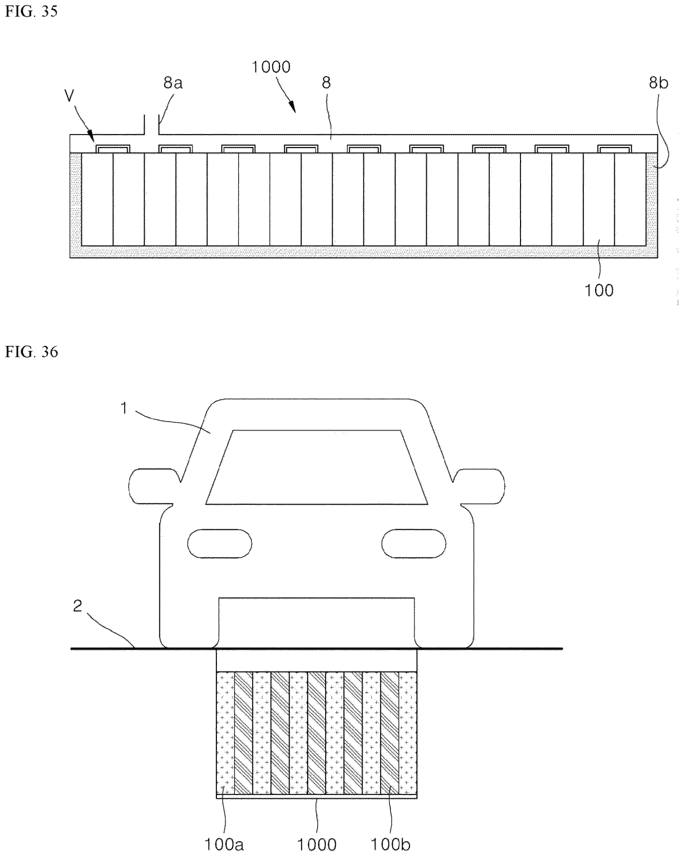

Referring to FIG. 35, the secondary battery 1000 may further include a shielding member 8b disposed between the container 8 and the plurality of secondary battery modules 100.

The shielding member 8b may electrically insulate the plurality of secondary battery modules 100 from the container 8. The shielding member 8b may prevent foreign substances having penetrated into the container 8 from the outside from entering the plurality of secondary battery modules 100. The shielding member 8b may absorb the electrolyte leaking from the plurality of layers 10. The shielding member 8b may be made of a polymer compound such as lime, cement, foam-type polymer compound, or vinyl.

According to an embodiment, the shielding member 8b may entirely fill the inner space inside the container 8 including the service space V. For example, when the shielding member 8b is made of the concrete, the concrete may be poured into the container 8 while the container 8 has contained therein the plurality of secondary battery modules 100 and the control module 1110. In this case, an injection hole 8a through which the concrete is injected is defined at a top of the container 8. The injection hole 8a may serve as an outlet through which gas that may be generated from the plurality of layers 10 is discharged.

According to an embodiment, the shielding member 8b may be made of salt water, and the salt water may be injected into the container 8 through the injection hole 8a. A drain hole (not shown) through which the salt water is drained may be defined at a bottom of the container 8.

FIGS. 36 to 41 are diagrams showing a schematic structure of a secondary battery according to still yet another embodiment of the present disclosure.

In this embodiment, when some of the plurality of secondary battery modules 100 are charged, the others thereof are discharged. In this embodiment, the secondary battery 1000 includes a plurality of first battery modules 100a and a plurality of second battery modules 100b that are discharged while the plurality of first battery modules 100a are charged.

The secondary battery module 100 generates the heat when being discharged and absorbs the heat when being charged. In order to stabilize the temperature, it is desirable to not discharge or charge the others of the plurality of battery modules 100b when some of the plurality of battery modules 100a are charged or discharged.

After only the plurality of first battery modules 100a are discharged to charge the vehicle 1, the plurality of first battery modules 100a has been discharged. When the plurality of first battery modules 100a has been discharged, the plurality of first battery module 100a may be charged while the plurality of second battery module 100b are discharged to charge the vehicle 1. At this time, the plurality of second battery module 100b generates the heat, while the plurality of first battery module 100a absorb the heat. Thus, the temperature is stabilized. According to an embodiment, the plurality of second battery modules 100b may simultaneously charge the vehicle 1 and the plurality of first battery modules 100a.

The plurality of first battery module 100a and the plurality of second battery module 100b may be controlled such that some of the plurality of first battery modules 100a act as the second battery modules 100b or vice versa, based on the external temperature or a total temperature of all of the secondary battery modules 100. Furthermore, the plurality of first battery module 100a and the plurality of second battery module 100b may be controlled by appropriately adjusting the charging and discharging conditions thereof.

Referring to FIG. 36, the plurality of first battery modules 100a and the plurality of second battery modules 100b are arranged densely in the horizontal direction and are arranged in an alternate manner with each other.

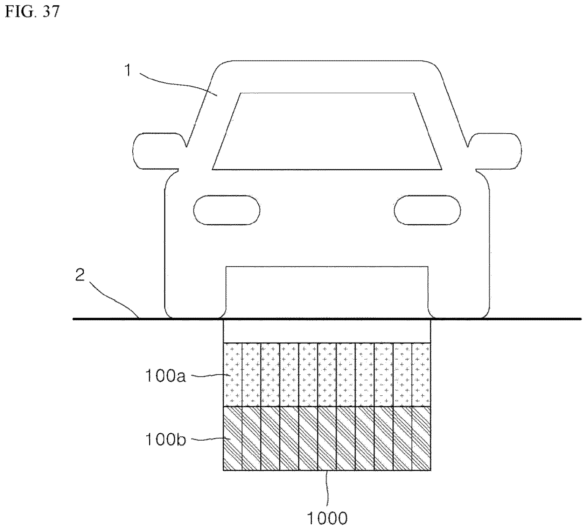

Referring to FIG. 37, a horizontal arrangement of the plurality of first battery modules 100a arranged horizontally and a horizontal arrangement of the plurality of second battery modules 100b arranged horizontally are stacked vertically. That is, the horizontal arrangement of the plurality of first battery modules 100a is disposed on top of the horizontal arrangement of the plurality of second battery modules 100b.

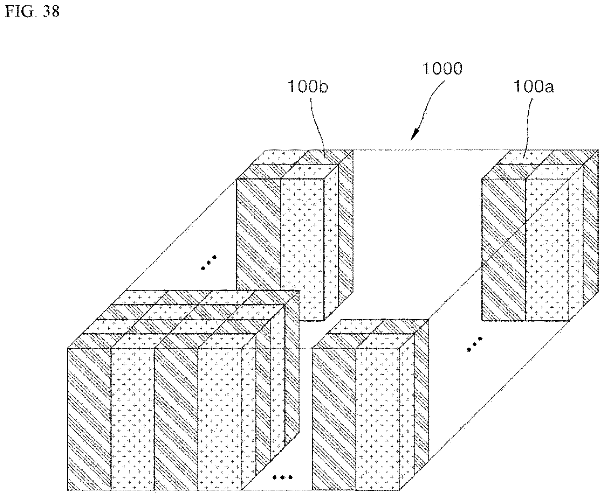

Referring to FIG. 38, the plurality of first battery modules 100a and the plurality of second battery modules 100b may be arranged horizontally and may be arranged in an alternate manner with each other. A heat exchange means for mutual heat exchange between each of the plurality of first battery modules 100a and each of the plurality of second battery modules 100b may be provided between each of the plurality of first battery modules 100a and each of the plurality of second battery modules 100b.

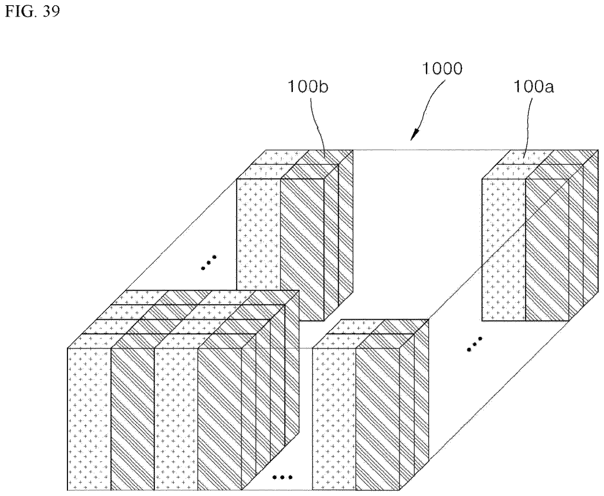

Referring to FIG. 39, the plurality of first battery modules 100a may be arranged in a plurality of columns, and the plurality of second battery modules 100b may be arranged in a plurality of columns. Each of the columns of the plurality of second battery modules 100b may be disposed between adjacent ones of the columns of the plurality of first battery modules 100a.

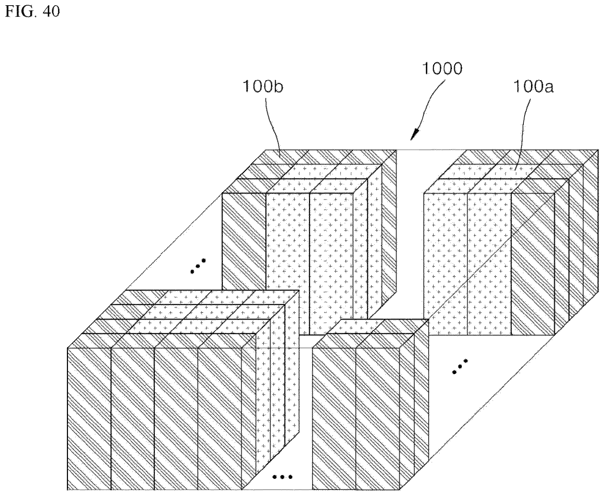

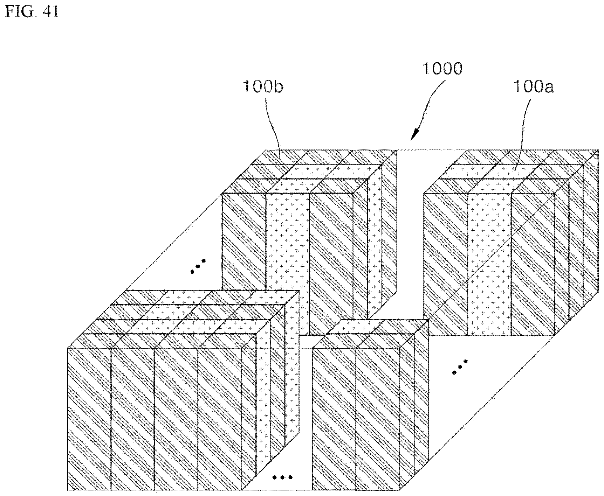

Referring to FIG. 40, the plurality of second battery modules 100b may be arranged in an edge area of the secondary battery 1000. The plurality of first battery modules 100a may be surrounded with the plurality of second battery modules 100b. In FIG. 41, the plurality of outermost first battery modules 100a may surround the plurality of outermost second battery modules 100b which in turn may surround the plurality of next-outermost first battery modules 100a which in turn may surround the plurality of next-outermost second battery modules 100b.

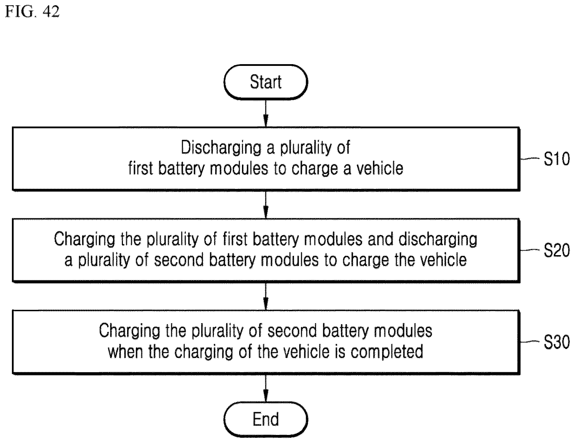

FIG. 42 is a flowchart of a secondary battery control method according to still yet another embodiment of the present disclosure.

When the charging target 1 such as the vehicle is connected to the charger and the charging thereof begins, the plurality of first battery modules 100a are discharged to charge the vehicle 1 in S10. Thus, all of the secondary battery modules 100 are discharged simultaneously to prevent the temperature thereof from rising excessively.

When the discharging of the plurality of first battery modules 100a has been completed, the plurality of first battery modules 100a are charged, and the plurality of second battery modules 100b are discharged to charge the vehicle 1 in S20. The plurality of second battery modules 100b generates the heat while the plurality of first battery modules 100a absorbs the heat. Thus, the temperature is stabilized. According to an embodiment, the plurality of second battery modules 100b may simultaneously the charge vehicle 1 and the plurality of first battery modules 100a.

When the charging of the charging target 1 such as the vehicle has been completed, the plurality of second battery modules 100b are charged in S30. At this time, when the plurality of first battery modules 100a are not fully charged, the plurality of first battery module 100a may be charged.

The plurality of first battery module 100a and the plurality of second battery module 100b may be controlled such that some of the plurality of first battery modules 100a act as the second battery modules 100b or vice versa, based on the external temperature or a total temperature of all of the secondary battery modules 100. Furthermore, the plurality of first battery module 100a and the plurality of second battery module 100b may be controlled by appropriately adjusting the charging and discharging conditions thereof.

The preferred embodiments of the present disclosure have been shown and described above. However, the present disclosure is not limited to the specific embodiments as described above. Various modifications may be made thereto by those skilled in the art without departing from the technical idea of the present disclosure as claimed in the patent claims. These modifications should not be understood individually based on the technical idea or perspective of the present disclosure.

## Claims

1. A secondary battery module comprising:
a stack of a plurality of layers stacked vertically, wherein a redox reaction occurs in each of the plurality of layers; and
a pair of busbars electrically connecting the plurality of layers to each other,
wherein each of the plurality of layers comprises:
an anode in which a first half reaction occurs; and
a cathode in which a second half reaction occurs,
wherein the anode and the cathode of each layer are arranged vertically.

2. The secondary battery module of claim 1, wherein the anode of one layer of the plurality of layers is stacked under the anode of another layer adjacent upwardly to said one layer,
wherein the cathode of said another layer is stacked under the cathode of still another layer adjacent upwardly to said another layer.

3. The secondary battery module of claim 1, wherein the plurality of layers comprise:
a plurality of anode current collectors electrically connected to a plurality of anodes, respectively;
a plurality of cathode current collectors electrically connected to a plurality of cathodes, respectively,
wherein each of the plurality of anode current collectors is disposed between adjacent ones of the plurality of anodes,
wherein each of the plurality of cathode current collectors is disposed between adjacent ones of the plurality of cathodes.

4. The secondary battery module of claim 3, wherein a portion of each of the plurality of anode current collectors protrudes outwardly from one side of corresponding one of the plurality of layers,
wherein a portion of each of the plurality of cathode current collectors protrudes outwardly from the other side opposite to said one side of the corresponding one of the plurality of layers.

5. The secondary battery module of claim 3, wherein a portion of the anode current collector and a portion of the cathode current collector protrudes outwardly in opposite directions to each other from a corresponding layer.

6. The secondary battery module of claim 1, wherein the plurality of layers comprise:
a plurality of anode current collectors electrically connected to a plurality of anodes, respectively;
a plurality of cathode current collectors electrically connected to a plurality of cathodes, respectively,
wherein the pair of busbars comprise:
a first busbar electrically connecting the plurality of anode current collectors to each other; and
a second busbar electrically connecting the plurality of cathode current collectors to each other.

7. The secondary battery module of claim 1, wherein one of the pair of busbars is disposed on one side surface of the stack of the plurality of layers,
wherein the other of the pair of busbars is disposed on an opposite side surface to said one side surface of the stack of the plurality of layers.

8. The secondary battery module of claim 7, further comprising:
an upper end plate disposed on a top of the stack of the plurality of layers;
a lower end plate disposed on a bottom of the stack of the plurality of layers; and
a tie surrounding and fastening the stack of the plurality of layers, the upper end plate, and the lower end plate to each other,
wherein the tie is disposed on both opposing side surfaces of the stack of the plurality of layers on which the pair of busbars are not disposed.

9. The secondary battery module of claim 1, wherein each of the pair of busbars extends in an elongate manner in the vertical direction.

10. The secondary battery module of claim 1, further comprising:
an upper end plate disposed on a top of the stack of the plurality of layers; and
a lower end plate disposed on a bottom of the stack of the plurality of layers,
wherein each of the pair of busbars has an upper end in contact with the upper end plate or a lower end in contact with the lower end plate.

11. The secondary battery module of claim 1, further comprising:
an upper end plate disposed on a top of the stack of the plurality of layers; and
a lower end plate disposed on a bottom of the stack of the plurality of layers,
wherein a vertical level of an upper end of each of the pair of busbars is higher than a vertical level of an upper end of the stack of the plurality of layers, or
a vertical level of a lower end of each of the pair of busbars is lower than a vertical level of a lower end of the stack of the plurality of layers.

12. The secondary battery module of claim 1, further comprising:
an upper end plate disposed on a top of the stack of the plurality of layers;
a lower end plate disposed on a bottom of the stack of the plurality of layers; and
a handle connected to the upper end plate.

13. A secondary battery comprising:
a plurality of secondary battery modules,
wherein each of the plurality of secondary battery modules comprises:
a stack of a plurality of layers stacked vertically, wherein a redox reaction occurs in each of the plurality of layers; and
a pair of busbars electrically connecting the plurality of layers to each other,
wherein the plurality of secondary battery modules are arranged densely in a horizontal direction.

14. The secondary battery of claim 13, wherein the plurality of secondary battery modules are arranged densely in the horizontal direction to form a horizontal arrangement,
wherein a plurality of horizontal arrangements are stacked vertically.

15. The secondary battery of claim 13, wherein respective adjacent busbars of respective pairs of busbars of adjacent ones among the plurality of secondary battery modules contact each other such that the adjacent secondary battery modules are electrically connected to each other.

16. The secondary battery of claim 15, wherein the respective adjacent busbars contacting each other are constructed to support each other.

17. The secondary battery of claim 13, wherein the secondary battery further comprises a supporter for supporting a side surface of each of some of the plurality of secondary battery modules.

18. The secondary battery of claim 13, wherein while some of the plurality of secondary battery modules are charged, the others of the plurality of secondary battery modules are discharged.

19. The secondary battery of claim 13, wherein the secondary battery further comprises a container in which the plurality of secondary battery modules are accommodated.

20. The secondary battery of claim 13, wherein the plurality of secondary battery modules is disposed under a bottom supporting a charging target to be charged with the plurality of secondary battery modules.

21. The secondary battery of claim 13, wherein the secondary battery further comprises a cover covering the plurality of secondary battery modules.

22. The secondary battery module of claim 21, wherein the cover heats a charging target to be charged with the plurality of secondary battery modules.

23. The secondary battery module of claim 21, further comparing a battery management system configured to control the plurality of secondary battery modules,
wherein the battery management system is disposed in the cover.
